# EUROPÄISCHE PATENTANMELDUNG

(11) **EP 0 735 055 A2**
(43) Veröffentlichungstag der Anmeldung: **02.10.1996**
(21) Anmeldenummer: 96104204.1
(22) Anmeldetag: 16.03.1996
(51) Int. Cl.: C08F 8/00, H05B 33/14

(54) **(CO)Polymerisate auf Basis von Vinyl-Einheiten und ihre Verwendung in elektrolumineszierenden Anordnungen**

(30) Priorität: 29.03.1995 DE 19511484
(71) Anmelder: BAYER AG, 51368 Leverkusen (DE)
(72) Erfinder: Chen, Yun, Dr., 47800 Krefeld (DE); Köhler, Burkhard, Dr., 51373 Leverkusen (DE); Wehrmann, Rolf, Dr., 47800 Krefeld (DE); Elschner, Andreas, Dr., 45479 Mülheim (DE); Dujardin, Ralf, Dr., 47877 Willich (DE)

(57) **Zusammenfassung**

Die vorliegende Erfindung betrifft (Co)Polymerisate, die mindestens einen wiederkehrenden Kettenbaustein der allgemeinen Formel (1) oder (2) und gegebenenfalls wiederkehrende Einheiten der allgemeinen Formel (3) enthalten, 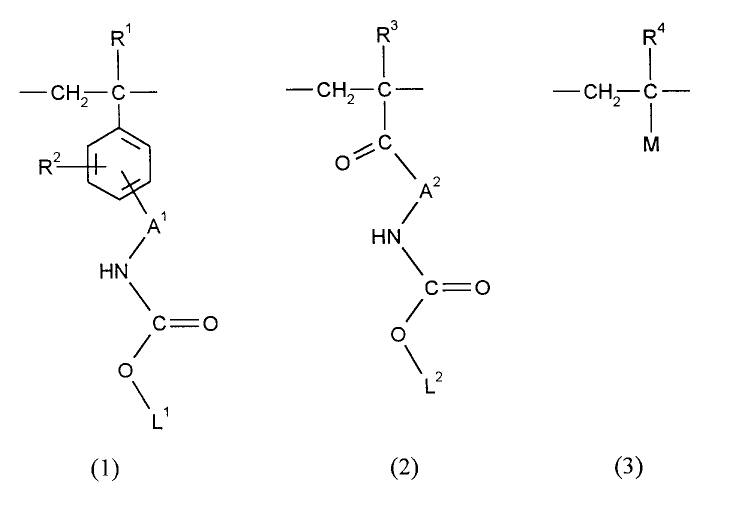 worin
L¹ und L² unabhängig voneinander einen photolumineszierenden Rest bedeuten, ein Verfahren zu ihrer Herstellung, ihre Verwendung in elektrolumineszierenden Anordnungen sowie die elektrolumineszierenden Anordnungen.

## Beschreibung

Bei der Entwicklung lichtemittierender Bauteile für Elektronik oder Photonik kommen heute hauptsächlich anorganische Halbleiter, wie Galliumarsenid, zum Einsatz. Auf Basis derartiger Substanzen können punktförmige Anzeigeelemente hergestellt werden. Großflächige Anordnungen sind nicht möglich.

Neben den Halbleiterleuchtdioden sind elektrolumineszierende Anordnungen auf Basis aufgedampfter niedermolekularer organischer Verbindungen bekannt (US-P 4 539 507, US-P 4 769 262, US-P 5 077 142, EP-A 406 762). Auch mit diesen Materialien können - bedingt durch das Herstellverfahren - nur kleindimensionierte LEDs hergestellt werden. Außerdem besitzen diese elektrolumineszierenden Anordnungen einen hohen Herstellungsaufwand und die aufgedampfte amorphe Schicht neigt zur morphologischen Veränderung, welche eine Verringerung der Elektrolumineszenz-Intensität und der Betriebsdauer verursachen kann.

Polymere, wie Poly-(p-phenylene) und Poly-(p-phenylenvinylene), werden als elektrolumineszierend beschrieben. G. Leising et al., Adv. Mater. 4 (1992) No. 1; Friend et al., J. Chem. Soc., Chem. Commun. 1992, S. 32-34; Saito et al., Polymer, 1990, Vol. 31, 1137; Friend et al., Physical Review B, Vol. 42, No. 18, 11670 oder WO 90/13148.

Im Gegensatz zu den durchkonjugierten Polymeren werden auch nichtdurchkonjugierte Polykondensate mit lumineszierenden Struktureinheiten in elektrolumineszierenden Anordnungen beschrieben (Macromol. Chem. Phys. 195, 2023-2037 (1994)).

In Gegensatz zu anderen Materialien zeichnen sich polymere Stoffe bei der Verwendung in elektrolumineszierender Anordnung durch ihre guten mechanischen und thermischen Stabilitäten aus. Außerdem könnte die Herstellung großflächiger Leuchtelemente aufgrund der Gieß-, Rakel- und Spin-coating-Fähigkeit der polymeren Stoffe ermöglicht werden.

Die vorliegende Erfindung stellt zum Aufbau elektrolumineszierender Anordnungen Polymere auf Basis von Polystyrol und Polyacrylat mit kovalent gebundenen Luminophoreinheiten in den Seitenketten bereit, wobei die Anknüpfung durch Urethanbildung eines isocyanatfunktionellen Polymers mit hydroxyfunktionellen Fluoreszenzfarbstoffen erfolgt. Im Hinblick auf eine Verwendung als elektrolumineszierende Materialien sind derartige Polymere aufgrund ihrer einfachen Herstellungsverfahren und guten Verarbeitbarkeit von technologischem Interesse.

Die vorliegende Erfindung betrifft (Co)Polymerisate, die mindestens einen wiederkehrenden Kettenbaustein der allgemeinen Formel (1) oder (2) und gegebenenfalls wiederkehrende Einheiten der allgemeinen Formel (3) enthalten, 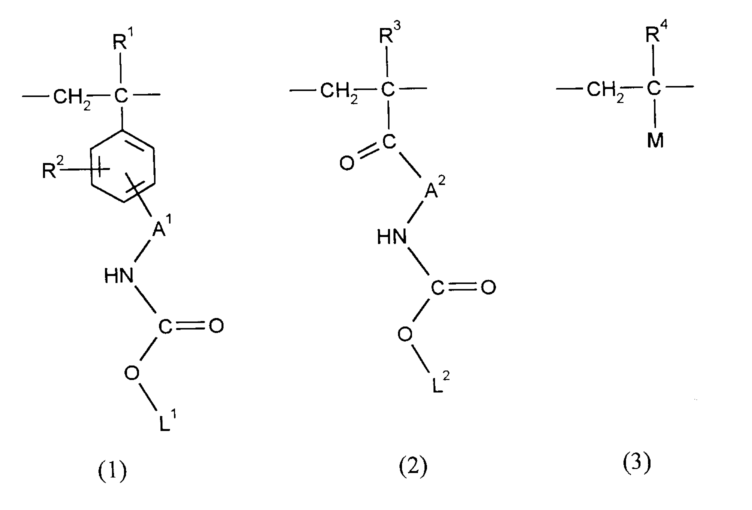 worin
- R¹, R³ und R⁴: unabhängig voneinander Wasserstoff oder C₁-C₆-Alkyl bedeuten,
- R²: Wasserstoff, C₁-C₃₀-Alkyl, C₆-C₁₈-Aryl oder C₁-C₃₀-Alkoxy bedeutet,
- M: für CN oder C₁-C₃₀-Alkoxycarbonyl, C₁-C₃₀-(Di)-alkyl-aminocarbonyl, C₁-C₃₀-Alkylcarbonyl steht, die jeweils durch Hydroxy oder C₁-C₆-Alkoxycarbonyl substituiert sein können, weiterhin für Phenyl, Naphthyl, Anthracenyl, Pyridinyl, Carbazolyl steht, die jeweils durch Reste ausgewählt aus der Gruppe Halogen, Hydroxy, Silyl, C₁-C₃₀-Alkyl, C₆-C₁₈-Aryl, C₁-C₃₀-Alkoxy, C₁-C₃₀-Alkoxycarbonyl, C₁-C₃₀-Acyloxy, C₁-C₃₀-Alkylcarbonyl substituiert sein können,
- A¹ und A²: unabhängig voneinander C₆-C₁₈-Arylen oder C₁-C₃₀-Alkylen bedeuten, deren aliphatische Kohlenstoffkette durch ein bis drei Heteroatome wie Sauerstoff, Schwefel und/oder durch ein bis zwei gegebenenfalls durch C₁-C₆-Alkyl substituierte Phenylene oder Naphthylene unterbrochen sein kann, bedeuten, und
- L¹ und L²: unabhängig voneinander einen photolumineszierenden Rest bedeuten,
wobei der Anteil an Struktureinheiten der Formel (3) 0 bis 99,5 mol-%, vorzugsweise 40 bis 99,5 mol-% und der Anteil an Struktureinheiten der Formel (1) oder (2) jeweils 0,5 bis 100 mol-%, vorzugsweise 0,5 bis 60 mol-% beträgt und sich die Molanteile zu 100 ergänzen.

In den obengenannten Formeln bedeuten R¹, R³ und R⁴ unabhängig voneinander vorzugsweise Wasserstoff, Methyl oder Ethyl.
- R²: bedeutet vorzugsweise Wasserstoff, C₁-c₆-Alkyl oder gegebenenfalls durch Methyl, Ethyl, n-Propyl und/oder iso-Propyl substituiertes Phenyl.
- M: steht vorzugsweise für CN oder C₁-C₁₅-Alkoxycarbonyl-, C₁-C₁₅-(Di)-Alkylaminocarbonyl, C₁-C₁₅-Alkylcarbonyl, die jeweils durch Hydroxy, Methoxycarbonyl, Ethoxycarbonyl, n- und/oder iso-Propoxycarbonyl substituiert sein können, weiterhin vorzugsweise für Phenyl, Naphthyl, Anthracenyl, Pyridinyl, Carbazolyl, die jeweils durch Reste ausgewählt aus der Gruppe Halogen, Hydroxy, Silyl, C₁-C₆-Alkyl, C₁-C₆-Alkoxy, C₁-C₆-Alkoxycarbonyl, C₁-C₆-Acyloxy, C₁-C₆-Alkylcarbonyl und gegebenenfalls durch Methyl, Ethyl, n- und/oder iso-Propyl substituiertes Phenyl substituiert sein können.
- A¹ und A²: bedeuten unabhängig voneinander vorzugsweise C₆-C₁₂-Arylen, insbesondere Phenylen oder Naphthylen, oder C₁-C₁₂-Alkylen, deren Kohlenstoffkette durch ein bis drei Heteroatome wie O, S und/oder durch ein bis zwei gegebenenfalls mit C₁-C₆-Alkyl substituierte Phenylene oder Naphthylene unterbrochen sein kann.
- L¹ und L²: stehen unabhängig voneinander für einen photolumineszierenden Rest, der auf dem Gerüst eines Fluoreszenzfarbstoffs basiert, der vorzugsweise ausgewählt ist aus der Gruppe der
Cumarine der Formel (4) 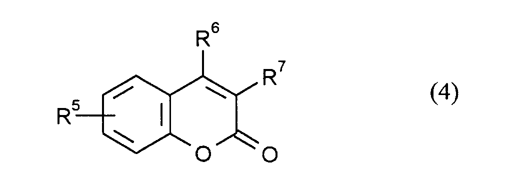 Pyrene der Formel (5) 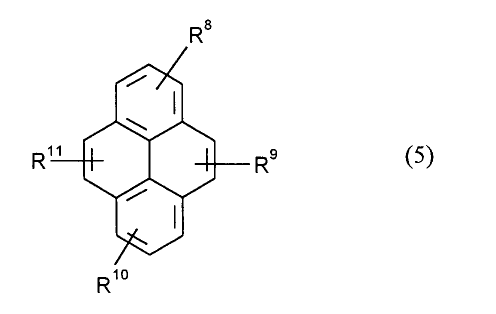 1,8-Naphthalimide der Formel (6) 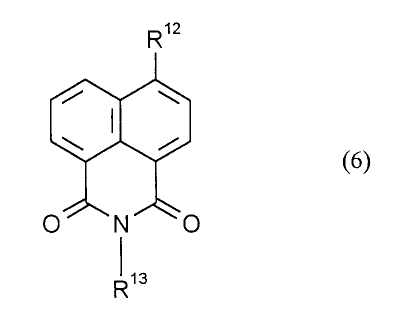 1,8-Naphthaloylen-1',2'-benzimidazole der Formel (7) 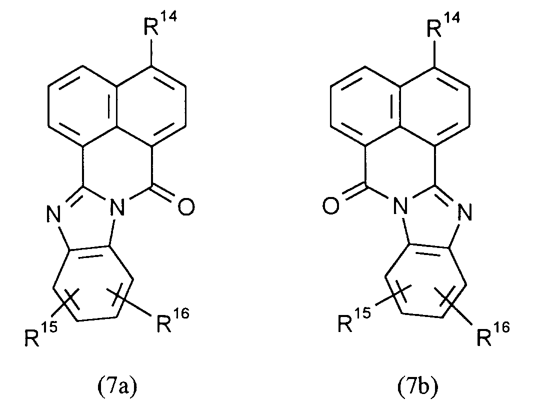 Phenothiazine oder Phenoxazine der Formel (8) 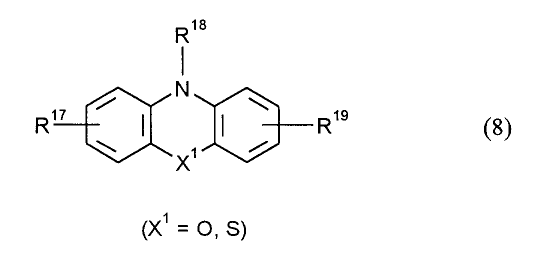 Benzopyrone der Formel (9) 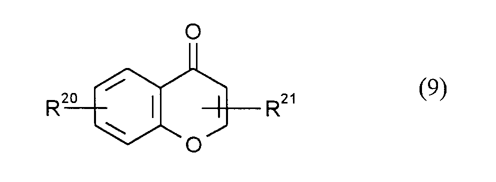 Carbazole, Fluorene, Dibenzothiophene und -furane der Formel (10) 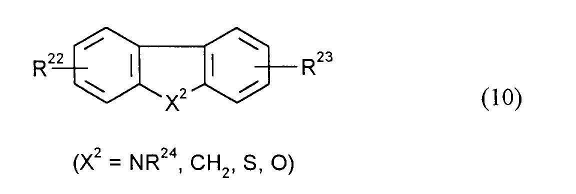 Oxazole, 1,3,4-Oxadiazole und 1,2,4-Triazole der Formel (11) 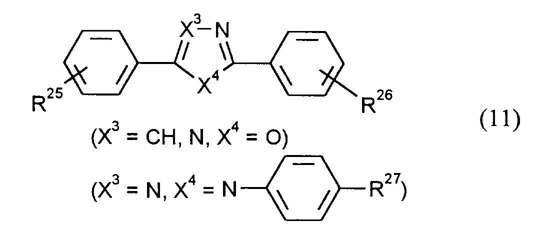 Benzochinoline der Formel (12) 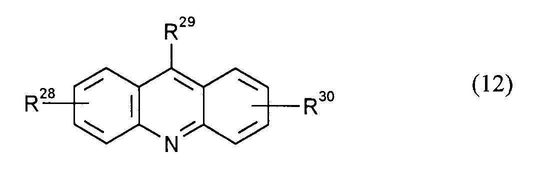 9,10-Bis-(phenylethinyl)-antracene der Formel (13) 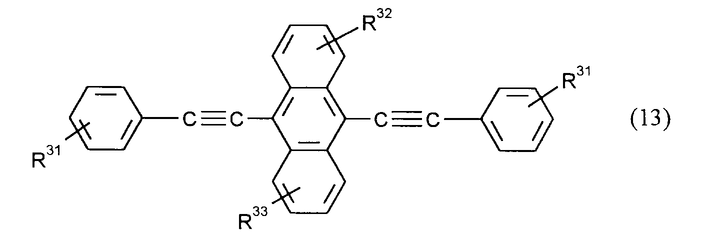 Fluorone der Formel (14) 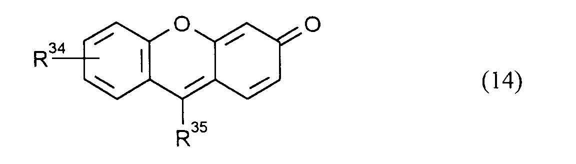 9,10-Diphenylantracen der Formel (15) 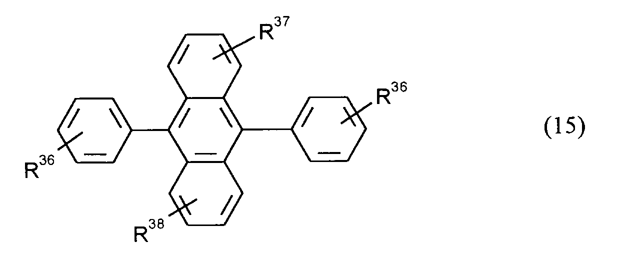 2-Styrylbenzazol der Formel (16) 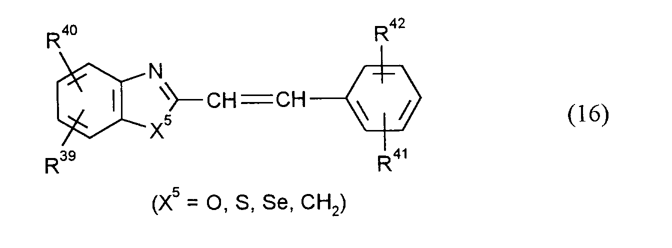
wobei
- R⁵: für Wasserstoff, C₁-C₃₀-Alkyl, C₆-C₁₈-Aryl, C₇-C₂₄-Aralkyl oder für -NR⁴³R⁴⁴ steht, wobei R⁴³ und R⁴⁴ unabhängig voneinander für C₁-C₃₀-Alkyl, C₆-C₁₈-Aryl, C₇-C₂₄-Aralkyl stehen oder gemeinsam mit dem Stickstoffatom, an das sie gebunden sind, einen Morpholin-, Piperidin-, Pyrrolidin- oder Piperazinring, der einen oder zwei Substituenten aus der Gruppe Methyl, Ethyl und Phenyl tragen kann, bedeuten können,
- R⁶: für Wasserstoff, Cyano, C₁-C₃₀-Alkyl, C₆-C₁₈-Aryl oder C₇-C₂₄-Aralkyl, C₁-C₃₀-Alkoxy, C₁-C₁₂-Alkylcarbonyl, C₁-C₁₂-Alkoxycarbonyl, C₁-C₁₂-(Di)-Alkylaminocarbonyl steht,
- R⁷: für Wasserstoff, Cyano, C₁-C₃₀-Alkyl, C₆-C₁₈-Aryl oder C₇-C₂₄-Aralkyl, C₁-C₃₀-Alkoxy oder für 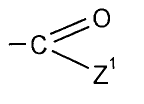 steht, wobei
- Z¹: für eine Gruppe OR⁴⁵ oder 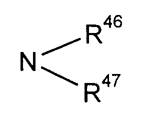 steht und
- R⁴⁵, R⁴⁶ und R⁴⁷: unabhängig voneinander für C₁-C₃₀-Alkyl, C₆-C₁₈-Aryl oder C₇-C₂₄-Aralkyl stehen, wobei die aromatischen Ringe zusätzlich durch Halogen, C₁-C₆-Alkyl und/oder C₁-C₆-Alkoxy substituiert sein können,
- R⁸ bis R¹⁰: unabhängig voneinander Wasserstoff, Cyano, C₁-C₃₀-Alkyl, C₆-C₁₈-Aryl, C₇-C₂₄-Aralkyl, C₁-C₃₀-Alkoxy, C₁-C₁₂-Alkylcarbonyl, C₁-C₁₂-Alkoxycarbonyl oder eine Aminogruppe mit einer oder zwei C₁-C₆-Alkylgruppen bedeuten,
- R¹¹: für Wasserstoff, Cyano, C₁-C₃₀-Alkyl, C₆-C₁₈-Aryl, C₇-C₂₄-Aralkyl, C₁-C₃₀-Alkoxy, Amino, C₁-C₁₂-Alkylcarbonyl, C₁-C₁₂-Alkoxycarbonyl oder C₁-C₁₂-(Di)Alkylaminocarbonyl steht,
- R¹²: Für Wasserstoff, Halogen, Nitro, C₁-C₄-Alkylcarbonyl, C₁-C₄-Alkoxycarbonyl, C₈-C₂₄-Aralkenyl, unsubstituiertes Amino oder für ein- oder zweifach, gleich oder verschieden durch C₁-C₃₀-Alkyl, C₆-C₁₈-Aryl, C₇-C₂₄-Aralkyl substituiertes Amino steht,
- R¹²: weiterhin für Morpholinyl, Piperidinyl, Pyrrolidinyl oder Piperazinyl steht, die einen oder zwei Substituenten aus der Gruppe Methyl, Ethyl und Phenyl tragen können,
- R¹³: für Wasserstoff, C₁-C₃₀-Alkyl, C₆-C₁₈-Aryl, C₇-C₂₄-Aralkyl oder C₁-C₃₀-Alkoxy steht,
- R¹⁴: für Wasserstoff, C₁-C₃₀-Alkyl, C₆-C₁₈-Aryl, C₇-C₂₄-Aralkyl, C₁-C₃₀-Alkoxy oder für -NR⁴⁸R⁴⁹ steht, wobei R⁴⁸ und R⁴⁹ unabhängig voneinander für C₁-C₃₀-Alkyl, C₆-C₁₈-Aryl, C₇-C₂₄-Aralkyl stehen oder gemeinsam mit dem Stickstoffatom, an das sie gebunden sind, einen Morpholin-, Piperidin-, Pyrrolidin- oder Piperazinring, der einen oder zwei Substituenten aus der Gruppe Methyl, Ethyl und Phenyl tragen kann, bedeuten können.
- R¹⁵ und R¹⁶: unabhängig voneinander für Wasserstoff, Halogen, Nitro, C₁-C₃₀-Alkyl, C₆-C₁₈-Aryl, C₇-C₂₄-Aralkyl, C₁-C₁₂-Alkylcarbonyl, C₁-C₁₂-Alkoxycarbonyl, C₁-C₃₀-Alkoxy, C₁-C₁₂-(Di)Alkylaminocarbonyl, C₁-C₆-(Di)Alkylamino stehen,
- R¹⁸ und R²⁴: unabhängig voneinander für Wasserstoff, C₁-C₃₀-Alkyl, C₆-C₁₈-Aryl und C₇-C₂₄-Aralkyl steht und
- R¹⁷, R¹⁹ bis R²³, R²⁵ bis R⁴²: unabhängig voneinander für Wasserstoff, Cyano, C₁-C₃₀-Alkyl, C₆-C₁₈-Aryl, C₇-C₂₄-Aralkyl, Amino, C₁-C₁₂-Alkylcarbonyl, C₁-C₁₂-Alkoxycarbonyl, C₁-C₃₀-Alkoxy, C₁-C₁₂-(Di)Alkylaminocarbonyl, C₁-C₆-(Di)Alkylamino stehen,
wobei sich mindestens eine Hydroxygruppe an einer aliphatischen Kohlenstoffkette oder an einem aromatischen Ring in den Substituenten von R⁵ bis R⁴² befindet und die Anknüpfung des photolumineszierenden Rests an die Polymerseitenketten durch Reaktion dieser Hydroxygruppe mit einer Isocyanat-Gruppe am Rest A¹ bzw. A² unter Ausbildung der Urethan-Gruppe (-NH-COO-) erfolgt.

Die aliphatischen Kohlenstoffketten in den oben genannten Resten R⁵ bis R⁴² können durch ein bis drei Heteroatome wie Sauerstoff, Schwefel und/oder Stickstoff und/oder ein bis zwei gegebenenfalls mit C₁-C₆-Alkyl, vorzugsweise C₁-C₄-Alkyl substituierte Phenylene und Naphthylene unterbrochen sein.
- M: steht insbesondere für Phenyl, Naphthyl, Anthracenyl, Pyridinyl, Carbazolyl, die jeweils durch Hydroxy, Silyl, C₁-C₄-Alkyl, C₁-C₄-Alkoxy, C₁-C₆-Alkoxycarbonyl, C₁-C₆-Acyloxy, C₁-C₆-Alkylcarbonyl, gegebenenfalls durch Methyl, Ethyl, n- und/oder iso-Propyl substituiertes Phenyl substituiert sein können.
- A¹ und A²: stehen unabhängig voneinander insbesondere für C₁-C₆-Alkylen, bei denen die Kohlenstoffkette durch Heteroatome ausgewählt aus Sauerstoff, Schwefel und Stickstoff unterbrochen sein kann,
- L¹ und L²: stehen unabhängig voneinander insbesondere für einen Rest der Fluoreszenzfarbstoffe aus der Gruppe der Cumarine der Formel (4), Pyrene der Formel (5), 1,8-Naphthalimide der Formel (6), 1,8-Naphthaloylen-1',2'-benzimidazole der Formel (7), Phenothiazine und Phenoxazine der Formel (8), Carbazole und Fluorene der Formel (10).

In den o.g. Resten R⁵ bis R⁴⁹ stehen vorzugsweise C₁-C₃₀-Alkyl für C₁-C₁₆-Alkyl, insbesondere für C₁-C₁₂-Alkyl, C₆-C₁₈-Aryl, C₇-C₂₄-Aralkyl für gegebenenfalls durch Halogen, C₁-C₆-Alkyl, vorzugsweise C₁-C₄-Alkyl und/oder C₁-C₆-Alkoxy, vorzugsweise C₁-C₄-Alkoxy, substituiertes Phenyl, Naphthyl, Phenyl-C₁-C₄-alkyl oder Naphthyl-C₁-C₄-alkyl,
C₁-C₃₀-Alkoxy für C₁-C₁₆-Alkoxy, insbesondere C₁-C₁₂-Alkoxy,
C₁-C₁₂-Alkylcarbonyl, C₁-C₁₂-Alkoxycarbonyl und C₁-C₁₂-(Di)Alkylaminocarbonyl für C₁-C₈-Alkylcarbonyl, C₁-C₈-Alkoxycarbonyl und C₁-C₈-(Di)-Alkylaminocarbonyl,
C₈-C₂₄-Aralkenyl für Phenyl-C₂-C₁₆-alkenyl oder Naphthyl-C₂-C₁₆-alkenyl, insbesondere für Phenyl-C₂-C₁₂-alkenyl oder Naphthyl-C₂-C₁₂-alkenyl,
C₁-C₆-(Di)-Alkylamino für C₁-C₄-(Di)-Alkylamino.

Die Alkyl-Substituenten an aromatischen Ringen sind insbesondere Methyl, Ethyl, n- oder i-Propyl, n-, iso- oder tert.-Butyl.

Die vorliegende Erfindung betrifft weiterhin ein Verfahren zur Herstellung der obengenannten (Co)Polymerisate, die mindestens einen wiederkehrenden Kettenbaustein der allgemeinen Formel (1) oder (2) und gegebenenfalls wiederkehrende Einheiten der allgemeinen Formel (3) enthalten, 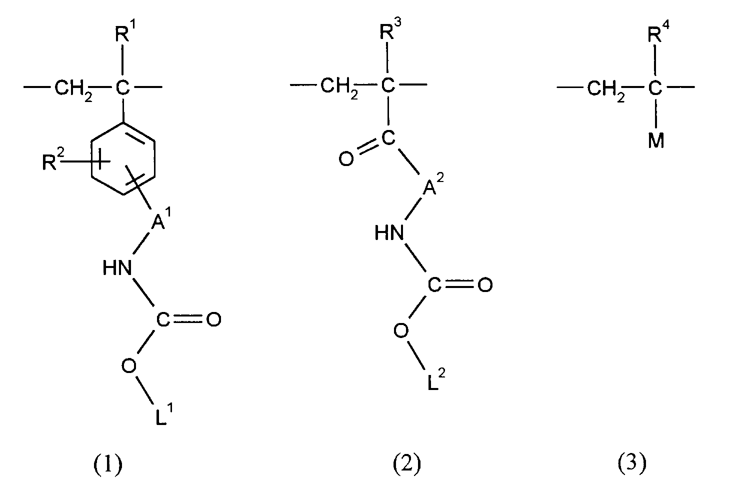 worin R¹, R², R³, R⁴, M, A¹, A², L¹ und L² den obengenannten Bedeutungsumfang haben und der Anteil an Struktureinheiten der Formel (3) 0 bis 99,5 %, vorzugsweise 40 bis 99,5 mol-% und der Anteil an Struktureinheiten der Formel (1) oder (2) jeweils 0,5 bis 100 %, vorzugsweise 0,5 bis 60 mol-% beträgt und sich die Molanteile zu 100 % ergänzen,
dadurch gekennzeichnet, daß man einen mit einer Hydroxygruppe funktionalisierten Fluoreszenzfarbstoff der Formel (17)

L¹-OH oder L²-OH (17)

wobei L¹ und L² die obengenannte Bedeutung haben,
mit einem (Co)Polymerisat, das mindestens einen wiederkehrenden Kettenbaustein der allgemeinen Formel (18) oder (19) und gegebenenfalls wiederkehrende Einheiten der allgemeinen Formel (3) enthält, 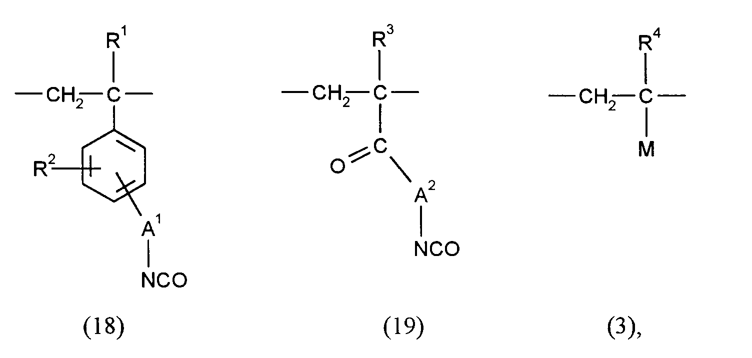 worin R¹, R², R³, R⁴, M, A¹ und A² den obengenannten Bedeutungsumfang haben und der Anteil an Struktureinheiten der Formel (3) 0 bis 99,5 mol-%, vorzugsweise 40 bis 99,5 mol-% und der Anteil an Struktureinheiten der Formel (18) oder (19) jeweils 0,5 bis 100 %, vorzugsweise 0,5 bis 60 mol-% beträgt und sich die Molanteile zu 100 % ergänzen,
unter Katalyse von beispielsweie einem tertiären Amin wie beispielsweise Triethylamin, Tributylamin oder Diazabicyclo-[2,2,2]octan, oder einer organischen Zinnverbindung wie beispielsweise Dibutylzinnoxid oder Dibutylzinndilaurat, in Gegenwart eines Verdünnungsmittels wie beispielsweise Benzol, Toluol, Xylol, Mesitylen, Chlorbenzol, Tetrahydrofuran, Dioxan, Ethylacetat, 1-Methoxy-2-propylacetat, Dichlormethan, 1,2-Dichlorethan oder Chloroform, bei Temperaturen von 20 bis 250°C, vorzugsweise 40 bis 150°C, umsetzt.

Die obengenannten (Co)Polymerisate mit dem wiederkehrenden Kettenbaustein der allgemeinen Formel (18) oder (19) und gegebenenfalls mit dem der allgemeinen Formel (3) lassen sich aus den entsprechenden auf Vinyl-Einheit basierenden Monomeren (20), (21) und (22) 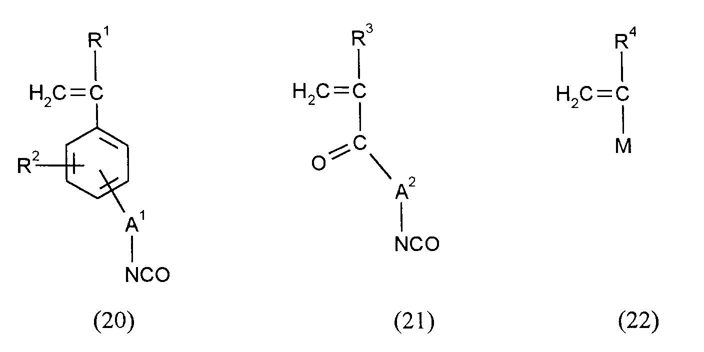 worin R¹ bis R⁴, M, A¹ und A² den obengenannten Bedeutungsumfang haben,
in einer Polymerisationsreaktion herstellen.

Derartige Polymerisationsverfahren sind in der Literatur beschrieben. Sie können ionisch oder radikalisch erfolgen. Eine anionische Polymerisation kann z.B. durch Starter wie Butyllithium oder Lithiumnaphthalid ausgelöst werden. Eine radikalische Polymerisation kann z.B. durch Radikalstarter wie z.B. Azoinitiatoren oder Peroxide, vorzugsweise AIBN (Azoisobuttersäuredinitril) oder Dibenzoylperoxid, ausgelöst werden. Die Herstellung der Polymere kann in Substanz oder in geeigneten Lösungsmitteln wie z.B. Denzol, Toluol, Tetrahydrofuran, Dioxan, Ethylacetat, Xylol, Chlorbenzol, 1-Methoxy-2-propyl-acetat, chlorierte Kohlenwasserstoffe, Aceton, bei Temperaturen von 20 bis 250°C erfolgen.

Die Herstellung der erfindungsgemäßen (Co)Polymerisate wird beispielsweise durch das folgende Formelschema dargestellt:

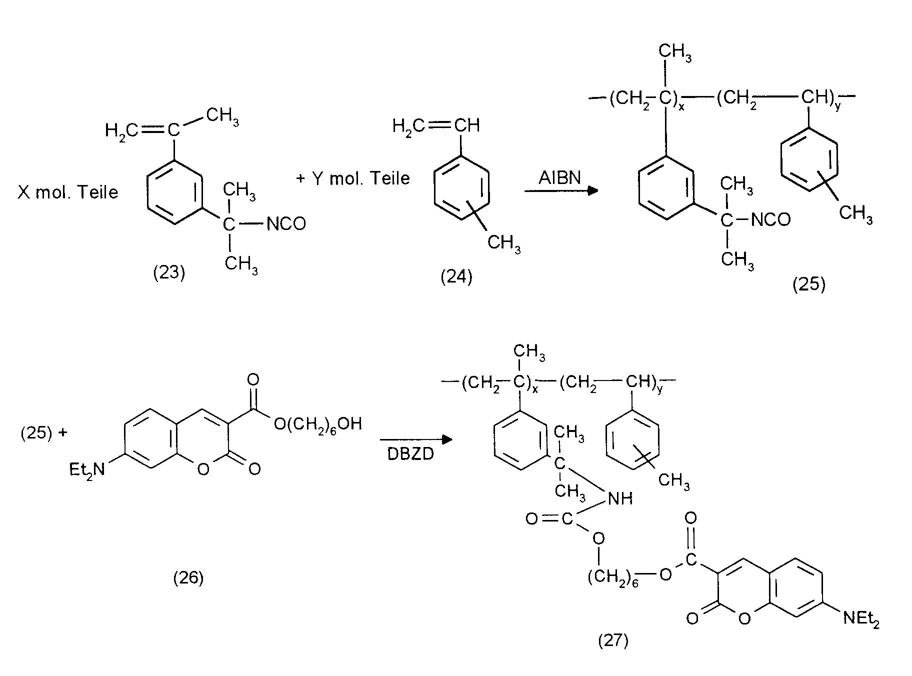

Hierbei werden m-(2-Isocyanato-prop-2-yl)-α-methylstyrol (23) und m/p-Methylstyrol (24) unter Mitwirkung von AIBN als Radikalstarter in Toluol bei 100 bis 110°C zu dem Copolymerisat (25) polymerisiert. Der bevorzugte Molanteil x an Comonomer (23) liegt zwischen 0 bis 60 %. Das so erhältliche Copolymerisat (25) reagiert mit 3-(6-Hydroxyhexoxycarbonyl)-7-diethylamino-cumarin (26) in Gegenwart katalytischer Mengen von Dibutylzinndilaurat (DBZD) in Methylenchlorid unter Rückfluß, wobei das Copolymerisat (27) mit einem seitenständigen Cumarin-Luminophor erhalten werden kann (Et = Ethyl).

Weiterhin kann die (Co)polymerisate der beschriebenen Art beispielsweise durch das folgende Formelschema dargestellt werden:

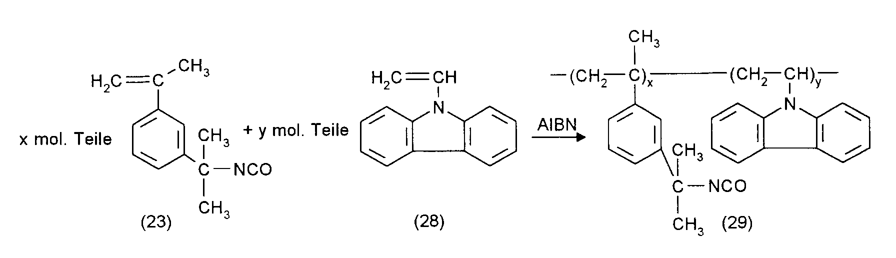

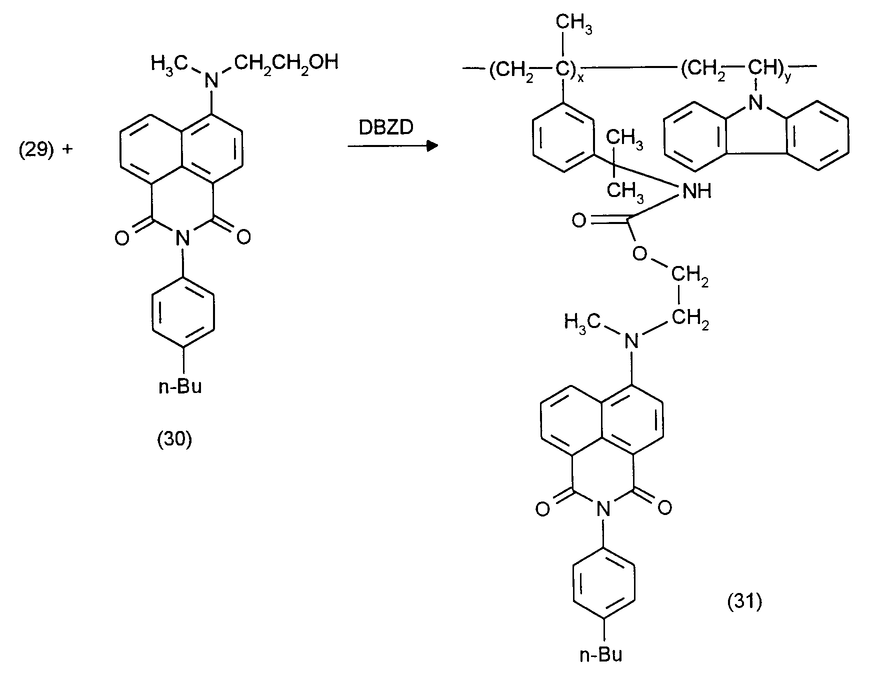

Hierbei erhält man auf einer ähnlichen Weise zu dem oben geschilderten Verfahren das Copolymerisate (31) mit einem seitenständigen 1,8-Naphthalimid-Luminophor aus N-(4-Butyl-phenyl)-4-(N'-methyl-N'-hydroxyethyl)amino-1,8-naphthalimid (30) und dem Polymerisat (29), welches in einer radikalischen Copolymerisation aus m-(2-Isocyanato-prop-2-yl)-α-methylstyrol (23) und N-Vinylcarbazol (28) in Toluol bei 100 bis 110°C hergestellt werden kann (Bu = Butyl).

Weiterhin kann die (Co)polymerisate der beschriebenen Art beispielsweise durch das folgende Formelschema dargestellt werden:

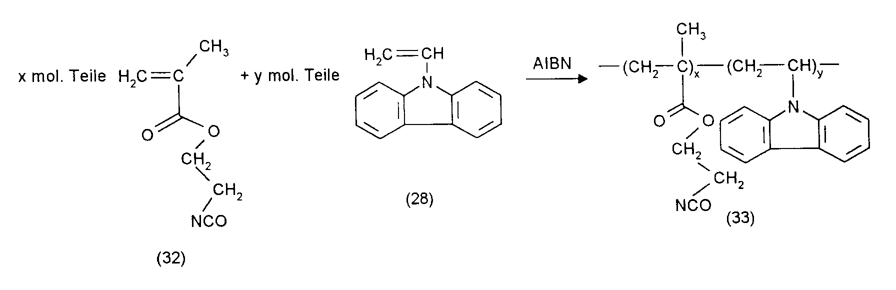

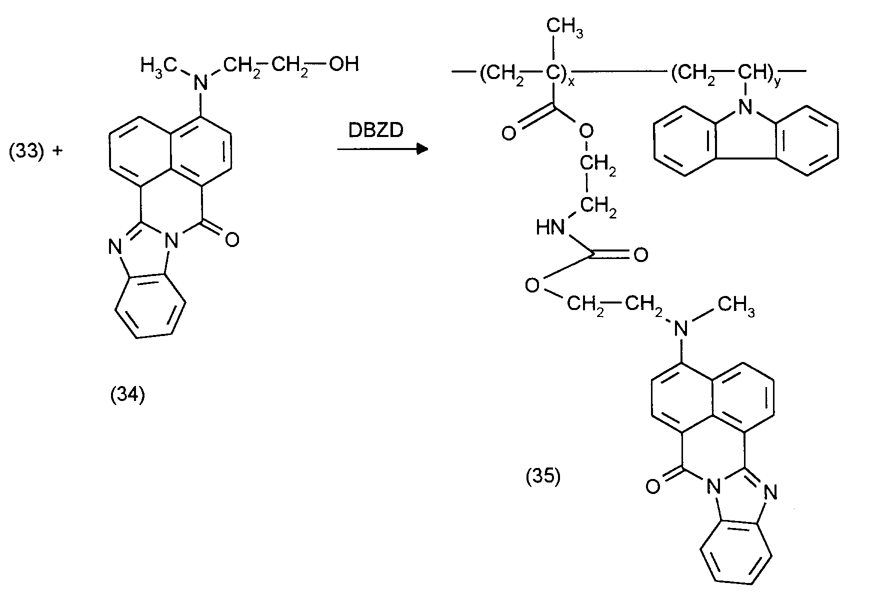

Hierbei erhält man auf einer ähnlichen Weise zu dem oben geschilderten Verfahren das Copolymerisat (35) mit einem seitenständigen 1,8-Naphthaloylen-1',2'-benzimidazol-Luminophor aus 4/5-(N-methyl-N-hydroxyethyl)amino- 1,8-nephthaloylen-1',2'-benzimidazol (34) (nur 4-Isomer wird abgebildet) und dem Polymerisat (33), welches in einer radikalischen Copolymerisation aus 2-Isocyanatoethyl-methacrylat (32) und N-Vinylcarbazol (28) in 1-Methoxy-2-propylacetat bei 100 bis 110°C hergestellt werden kann.

(Co)Polymerisate der vorliegenden Erfindung weisen Molekulargewichte im Bereich von 1000 bis 1 Million g/mol, vorzugsweise von 5000 bis 500000 g/mol - bestimmt durch Gelpermeationschromatographie - auf.

Die zur Herstellung von erfindungsgemäßen (Co)Polymerisaten benötigten mit Hydroxy funktionalisierten Fluoreszenzfarbstoffe (vgl. Definition des Restes L) sind teilweise bekannt.

Die Cumarinderivate der folgenden Formel (4a) sind neu: 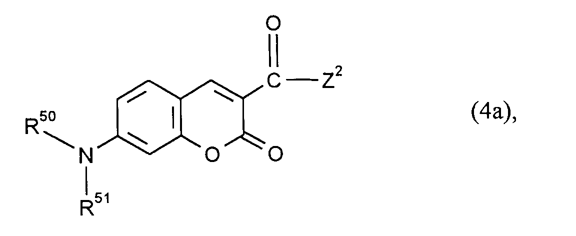 wobei
- R⁵⁰ und R⁵¹: unabhängig voneinander für Wasserstoff, C₁-C₃₀-Alkyl, C₆-C₁₈-Aryl oder C₆-C₂₄-Aralkyl stehen, die jeweils durch Hydroxy, Amino, Carboxy und/oder C₁-C₄-Alkoxycarbonyl substituiert sein können, oder
- R⁵⁰ und R⁵¹: gemeinsam mit dem Stickstoffatom, an das sie gebunden sind, einen Morpholin-, Piperidin-, Pyrrolidin- oder Piperazinring, der einen oder zwei Substituenten aus der Gruppe Methyl, Ethyl und Phenyl tragen kann, bedeuten können, und
- Z²: eine Gruppen -OR⁵² oder -NR⁵³R⁵⁴ bedeutet, wobei
- R⁵²: C₁-C₃₀-Alkyl, C₆-C₁₈-Aryl oder C₆-C₂₄-Aralkyl bedeutet, die jeweils durch mindestens eine Hydroxygruppe substituiert sind, und wobei die aromatischen Ringe zusätzlich noch durch Halogen, C₁-C₆-Alkyl und/oder C₁-C₆-Alkoxy substituiert sein können und
- R⁵³ und R⁵⁴: unabhängig voneinander für jeweils gegebenenfalls durch Hydroxy substituiertes C₁-C₃₀-Alkyl, C₆-C₁₈-Aryl, C₆-C₂₄-Aralkyl stehen, wobei mindestens einer der Reste R⁵³ und R⁵⁴ über eine Hydroxygruppe verfügt und wobei die aromatischen Ringe zusätzlich noch durch Halogen, C₁-C₆-Alkyl und/oder C₁-C₆-Alkoxy substituiert sein können.

Die erfindungsgemäßen Cumarinderivate der Formeln (4a) tragen mindestens eine Hydroxygruppe, über die sie an Polymerseitenketten chemisch gebunden werden können.

In Formel (4a) stehen R⁵⁰ und R⁵¹ unabhängig voneinander vorzugsweise für Wasserstoff oder gegebenenfalls durch Hydroxy, Amino, Carboxy und/oder C₁-C₄-Alkoxycarbonyl substituiertes C₁-C₁₆-Alkyl, jeweils unsubstituiertes oder durch C₁-C₄-Alkyl, Hydroxy, Amino, Carboxy und/oder C₁-C₄-Alkoxycarbonyl, Chlor und/oder Brom substituiertes Phenyl, Naphthyl, Phenyl-C₁-C₄-alkyl oder Naphthyl-C₁-C₄-alkyl.
- R⁵⁰ und R⁵¹: stehen insbesondere für gegebenenfalls durch Hydroxy, Amino und/oder Carboxy substituiertes C₁-C₆-Alkyl oder Phenyl.
- Z²: steht in der oben genannten Formel (4a) für -OR⁵² oder -NR⁵³R⁵⁴, wobei
- R⁵²: vorzugsweise für C₁-C₁₆-Alkyl, Phenyl, Naphthyl, Phenyl-C₁-C₄-alkyl, Naphthyl-C₁-C₄-alkyl steht, die jeweils durch mindestens eine Hydroxygruppe substituiert sind, und wobei die aromatischen Ringe zusätzlich noch durch Halogen, C₁-C₁₆-Alkyl und/oder C₁-C₆-Alkoxy substituiert sein können,
- R⁵³ und R⁵⁴: unabhängig voneinander vorzugsweise für jeweils gegebenenfalls durch Hydroxy substituiertes C₁-C₁₆-Alkyl, Phenyl, Naphthyl, Phenyl-C₁-C₄-alkyl, Naphthyl-C₁-C₄-alkyl stehen, wobei mindestens einer der Reste R⁵³ und R⁵⁴ über eine Hydroxygruppe verfügt und wobei die aromatischen Ringe zusätzlich noch durch Halogen, C₁-C₆-Alkyl und/oder C₁-C₆-Alkoxy substituiert sein können.
- R⁵²: steht besonders bevorzugt für durch eine Hydroxygruppe substituiertes C₁-C₁₂-Alkyl.
- R⁵³ und R⁵⁴: stehen unabhängig voneinander besonders bevorzugt für gegebenenfalls durch Hydroxy substituiertes C₂-C₁₂-Alkyl, wobei mindestens einer der Reste R⁵³ und R⁵⁴ über eine Hydroxygruppe verfügt.

Die neuen Cumarinderivate der Formel (4a), 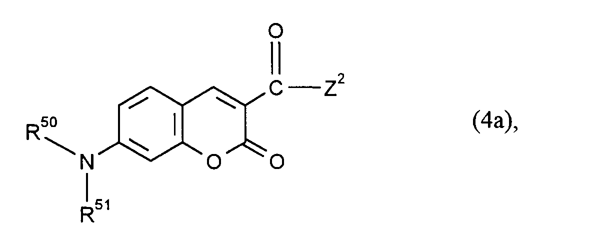 wobei R⁵⁰, R⁵¹ und Z² die oben genannte Bedeutung haben, lassen sich dadurch herstellen, daß man
a) im Falle, daß Z² für -OR⁵² steht, vorzugsweise in einem Eintopf-Verfahren, aus der Meldrum's-Säure der Formel (I) 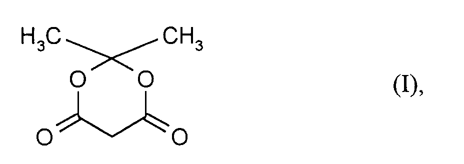 und einem Alkohol der Formel (II)

   R⁵²-OH (II),

   gegebenenfalls in Gegenwart eines Verdünnungsmittels wie beispielsweise Toluol, Xylol oder Mesitylen unter Katalyse von beispielsweise p-Toluolsulfonsäure bei Temperaturen im Bereich von 20 bis 250°C, vorzugsweise 80 bis 150°C das Malonsäurederivat der Formel (III) herstellt 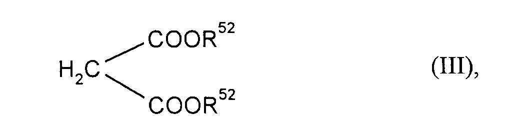 und dieses anschließend mit einem Salicylaldehyd der Formel (IV) 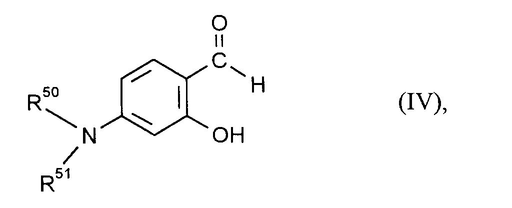 wobei R⁵⁰, R⁵¹ und R⁵² die oben genannte Bedeutung haben,
   gegebenenfalls in Gegenwart eines Verdünnungsmittels wie beispielsweise Toluol, Xylol oder Mesitylen unter Katalyse von beispielsweise Piperidinacetat bei Temperaturen von 50 bis 250°C, vorzugsweise 80 bis 140°C umsetzt, und
b) im Falle, daß Z² für -NR⁵³R⁵⁴ steht, einen Salicylaldehyd der Formel (IV) mit einem sekundären Amin der Formel (V) und einem Malonsäurederivat der Formel (VI),

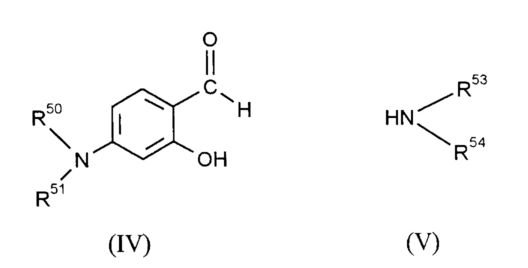

   H₂C(COOR⁵⁵)₂ (VI),

   wobei R⁵⁰, R⁵¹, R⁵³ und R⁵⁴ die oben genannte Bedeutung haben und R⁵⁵ für C₁-C₆-Alkyl steht,
   gegebenenfalls in Gegenwart eines Verdünnungsmittels wie beispielsweise Toluol, Xylol oder Mesitylen unter Katalyse von beispielsweise Piperidinacetat bei Temperaturen von 50 bis 250°C, vorzugsweise 80 bis 140°C umsetzt.

Bei der Durchführung des erfindungsgemäßen Verfahrens a) setzt man im allgemeinen pro Mol Verbindung der Formel (1) 2 bis 10 Mol, vorzugsweise 3 bis 6 Mol Alkohol der Formel (II) und pro Mol Verbindung der Formel (III) 0,5 bis 1 Mol, vorzugsweise 0,9 bis 1 Mol Salicylaldehyd der Formel (IV) ein.

Bei der Durchführung des erfindungsgemäßen Verfahrens b) setzt man im allgemeinen pro Mol Verbindung der Formel (IV) 2 bis 20 Mol, vorzugsweise 5 bis 10 Mol sekundäres Amin der Formel (V) und 1 bis 2 Mol, vorzugsweise 1,2 bis 1,5 Mol des Malonsäure-Derivates der Formel (VI) ein.

Die Herstellung der Cumarinderivate der Formel (4a) für Z² = -OR⁵² im Sinne einer Knoevenagel-Kondensation und anschließender Cyclisierung wird beispielhaft durch das folgende Formelschema dargestellt: 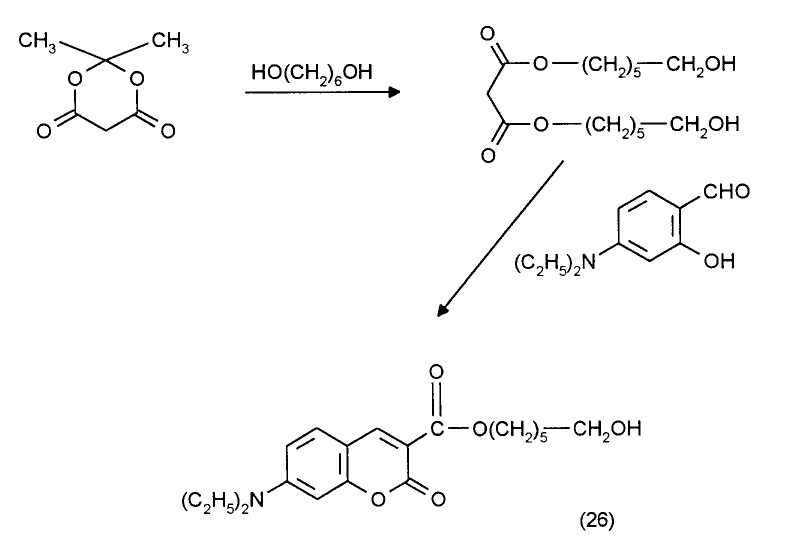 Hierbei wird zunächst Bis-(6-hydroxyhexyl)-malonat durch Umsetzung von der Meldrum's-Säure und 1,6-Hexandiol in Gegenwart katalytischer Menge von p-Toluolsulfonsäure unter Aceton- und Wasseraustritt hergestellt. Anschließend versetzt man das Bis-(6-hydroxyhexyl)-malonat mit 4-Diethylaminosalicylaldehyd in Gegenwart katalytischer Mengen Piperidinacetat unter Bildung des erwünschten 3-(6-Hydroxyhexoxycarbonyl)-7-diethylamino-cumarins.

Die Herstellung der Cumarinderivate der Formel (4a) für Z² = -NR⁵³R⁵⁴ wird beispielhaft durch das folgende Formelschema dargestellt:

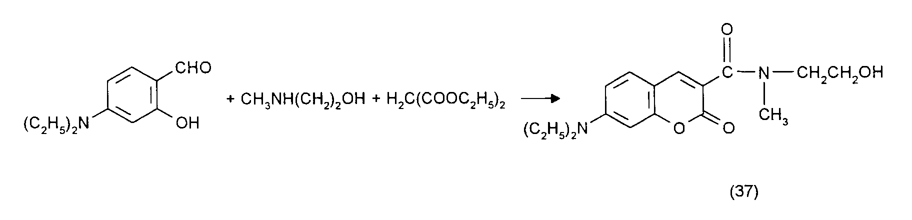

Hierbei wird 4-Diethylamino-salicylaldehyd in Gegenwart katalytischer Mengen von Piperidinacetat mit Diethylmalonat und 2-(Methylamino)-ethanol umgesetzt. Man erhält das erwünschte 3-[(N-Hydroxyethyl-N-methyl)aminocarbonyl]-7-diethylamino-cumarin.

Die Ausgangsprodukte der Formeln (I), (II), (III), (IV), (V) und (VI) sind allgemein bekannte Verbindungen der organischen Chemie.

Die 1,8-Naphthalimid-Derivate der folgenden Formeln (6a), (7a-1) und (7b-1) sind ebenfalls neu: 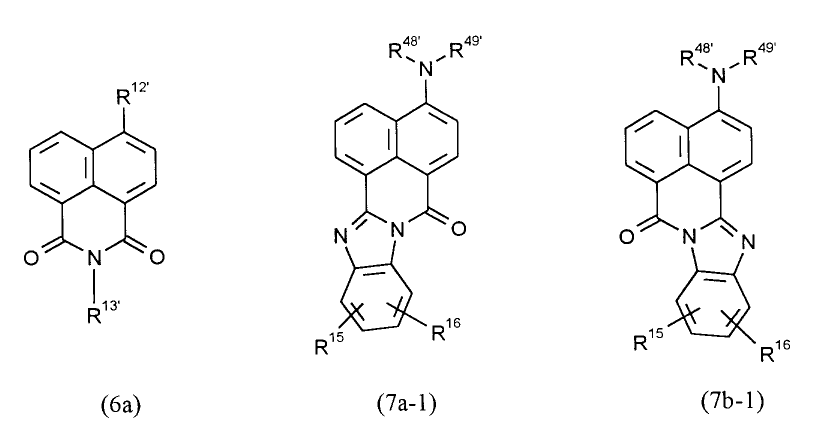 worin
- R^{12'}: für Wasserstoff, Halogen, Nitro, C₁-C₄-Alkoxycarbonyl, C₁-C₄-Acyl, C₈-C₂₄-Aralkenyl, unsubstituiertes Amino oder für ein- oder zweifach, gleich oder verschieden durch C₁-C₃₀-Alkyl, C₆-C₁₈-Aryl oder C₆-C₂₄-Aralkyl substituiertes Amino steht, wobei die oben genannten Kohlenstoffketten selbst durch Hydroxy substituiert sein können,
- R^{12'}: weiterhin für Morpholinyl, Piperidinyl, Pyrrolidinyl oder Piperazinyl steht, die einen oder zwei Substituenten ausgewählt aus Methyl, Ethyl und Phenyl tragen können,
- R^{13'}: für Wasserstoff oder C₁-C₃₀-Alkyl, C₁-C₃₀-Alkoxy, C₆-C₁₈-Aryl oder C₆-C₂₄-Aralkyl steht, welche ein- oder mehrfach durch Hydroxy substituiert sein können,
und mindestens einer der Reste R^{12'} und R^{13'} über eine Hydroxygruppe verfügt,
- R^{48'} und R^{49'}: unabhängig voneinander für C₁-C₃₀-Alkyl, C₆-C₁₈-Aryl, C₆-C₂₄-Aralkyl stehen, die durch Hydroxy substituiert sein können,
- R^{48'} und R^{49'}: weiterhin gemeinsam mit dem Stickstoffatom, an das sie gebunden sind, für Morpholinyl, Piperidinyl, Pyrrolidinyl oder Piperazinyl stehen, der einen oder zwei, gleiche oder verschiedene Substituenten ausgewählt aus Methyl, Ethyl und Phenyl tragen können,
wobei mindestens einer der Reste R^{48'} und R^{49'} über eine Hydroxygruppe verfügt und
- R¹⁵ und R¹⁶: die oben genannte Bedeutung haben.

Die 1,8-Naphthalimid-Derivate der Formeln (6a), (7a-1) und (7b-1) tragen mindestens eine Hydroxygruppe, über die sie an Polymerseitenketten chemisch gebunden werden können.

In der oben genannten Formel (6a) steht
- R^{12'}: vorzugsweise für Wasserstoff, Chlor, Brom, Nitro, Methoxycarbonyl, Ethoxycarbonyl, n- oder iso-Propoxycarbonyl, Methylcarbonyl, Ethylcarbonyl, n- oder iso-Propylcarbonyl, Amino, für Amino, welches ein- oder zweifach, gleich oder verschieden durch C₁-C₁₅-Alkyl, jeweils gegebenenfalls durch Methyl und/oder Ethyl substituiertes Phenyl, Naphthyl, Phenyl-C₁-C₄-alkyl, Naphthyl-C₁-C₄-alkyl substituiert ist, wobei die oben genannten Kohlenstoffketten selbst durch Hydroxy substituiert sein können.
- R^{12'}: weiterhin vorzugsweise für Morpholinyl, Piperidinyl, Pyrrolidinyl oder Piperazinyl steht, die einen oder zwei Substituenten ausgewählt aus Methyl, Ethyl und Phenyl tragen können,
- R^{13'}: steht vorzugsweise für Wasserstoff oder C₁-C₁₅-Alkyl, Phenyl oder Phenyl-C₁-C₄-alkyl, welche durch Hydroxy und die aromatischen Ringe zusätzlich noch durch Halogen, C₁-C₆-Alkyl und/oder C₁-C₆-Alkoxy substituiert sein können.
- R^{12'}: steht insbesondere für Chlor, Brom, Amino, welches ein- oder zweifach, gleich oder verschieden durch C₁-C₁₅-Alkyl substituiert ist, Morpholinyl, Piperidinyl, Pyrrolidinyl oder Piperazinyl, wobei die oben genannten Kohlenstoffketten selbst durch Hydroxy substituiert sein können,
- R^{13'}: steht insbesondere für C₁-C₁₂-Alkyl, gegebenenfalls durch Halogen, C₁-c₆-Alkyl und/oder C₁-C₆-Alkoxy substituiertes Phenyl, die eine Hydroxygruppe tragen können.

Mindestens einer der Reste R^{12'} und R^{13'} muß über eine Hydroxygruppe verfügen.
- R^{48'} und R^{49'}: in den Formeln (7a-1) und (7b-1) stehen unabhängig voneinander vorzugsweise für C₁-C₁₅-Alkyl, Phenyl, Naphthyl, Phenyl-C₁-C₄-alkyl, Naphthyl-C₁-C₄-alkyl, die einfach oder mehrfach, insbesondere einfach durch Hydroxy substituiert sein können,
- R^{48'} und R^{49'}: stehen weiterhin gemeinsam mit dem Stickstoffatom, an das sie gebunden sind, vorzugsweise für Piperidinyl, Piperazinyl, der einen oder zwei, gleiche oder verschiedene Substituenten ausgewählt aus Methyl, Ethyl und Phenyl tragen können.

Mindestens einer der Reste R^{48'} und R^{49'} muß über eine Hydroxygruppe verfügen.
- R¹⁵ und R¹⁶: in den Formeln (7a-1) und (7b-1) stehen unabhängig voneinander vorzugsweise für Wasserstoff, Halogen, C₁-C₁₅-Alkyl, C₁-C₁₅-Alkoxy, C₁-C₄-Alkoxycarbonyl, C₁-C₄-Acyl, C₁-C₆-(Di)Alkylamino, jeweils durch Methyl und/oder Ethyl substituiertes Phenyl, Naphthyl, Phenyl-C₁-C₆-alkyl, Naphthyl-C₁-C₆-alkyl.
- R^{48'} und R^{49'}: stehen insbesondere für C₁-C₁₂-Alkyl, Phenyl, Phenyl-C₁-C₆-alkyl, die durch Hydroxy substituiert sein können, wobei mindestens einer der Reste R^{48'} und R^{49'} über eine Hydroxygruppe verfügt.
- R¹⁵ und R¹⁶: stehen insbesondere für Wasserstoff, Halogen, C₁-C₁₂-Alkyl, C₁-C₁₂-Alkoxy, C₁-C₆-(Di)Alkylamino, Phenyl.

Die Zahl der Hydroxygruppen beträgt mindestens eine, es kann jedoch auch bis zu vier Hydroxygruppen sein.

Die aromatischen Ringe in den oben genannten Resten können einfach bis fünffach, vorzugsweise einfach bis dreifach gleich oder verschieden durch die genannten Substituenten substituiert sein.

Ein Verfahren zur Herstellung von 1,8-Naphthalimid-Derivaten der Formel (6a) 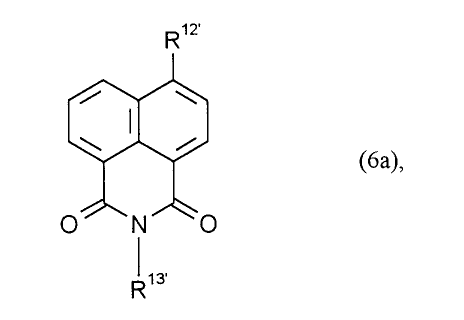 wobei R^{12'} und R^{13'} die oben genannte Bedeutung haben,
ist dadurch gekennzeichnet, daß man entweder
A) ein 1,8-Naphthalsäureanhydrid der Formel (VII) und ein primäres Amin der Formel (VIII),

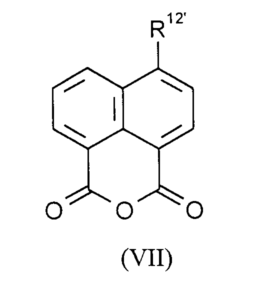

   R^{13'}-NH₂ (VIII),

   wobei R^{12'} und R^{13'} die oben genannte Bedeutung haben,
   bei Temperaturen von 50 bis 250°C, vorzugsweise 90 bis 140°C in Gegenwart eines Verdünnungsmittels wie beispielsweise Essigsäure, Butanol, Chlorbenzol, Toluol oder Xylol miteinander umsetzt oder
B) im Falle, daß R^{12'} in Formel (6a) ein- oder zweifach substituiertes Amino oder cyclisches Amino bedeutet, ein 1,8-Naphthalimid der Formel (6a-1) 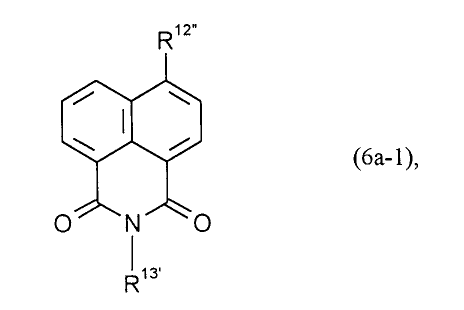 worin R^{12''} für Halogen, vorzugsweise Chlor, Brom, Iod, oder Nitro steht und R^{13'} die oben genannte Bedeutung hat,
   aus einem 1,8-Naphthalsäureanhydrid der Formel (VIIa) und einem primären Amin der Formel (VIII)

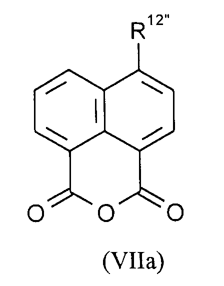

   R^{13'}-NH₂ (VIII),

   wobei R^{12''} und R^{13'} die oben genannte Bedeutung haben,
   bei Temperaturen von 50 bis 250°C, vorzugsweise 90 bis 140°C in Gegenwart eines Verdünnungsmittels wie beispielsweise Essigsäure, Butanol, Chlorbenzol, Toluol oder Xylol herstellt,
   und die so erhältliche Verbindung der Formel (6a-1) anschließend mit einem primären, sekundären Amin oder einem cyclischen sekundären Amin, dessen Struktur der von R^{12'} entspricht, gegebenenfalls in Gegenwart eines Lösungsmittel wie beispielsweise Methoxyethanol oder Butanol unter Katalyse von beispielsweise einem Kupfer(II)-Salz bei Temperaturen von 50 bis 250°C, vorzugsweise 100 bis 150°C umsetzt.

Ein Verfahren zur Herstellung von 1,8-Naphthalimid-Derivaten der Formeln (7a-1) und (7b-1) (Verfahren C) 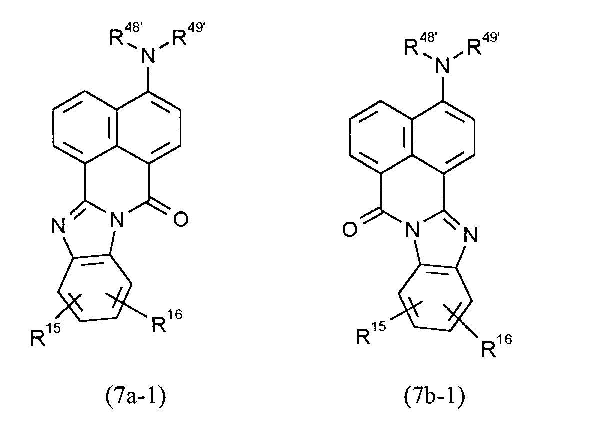 wobei R¹⁵, R¹⁶, R^{48'} und R^{49'} die oben genannte Bedeutung haben,
ist dadurch gekennzeichnet, daß man ein 1,8-Naphthalimid-Derivat der Formel (IXa und b), 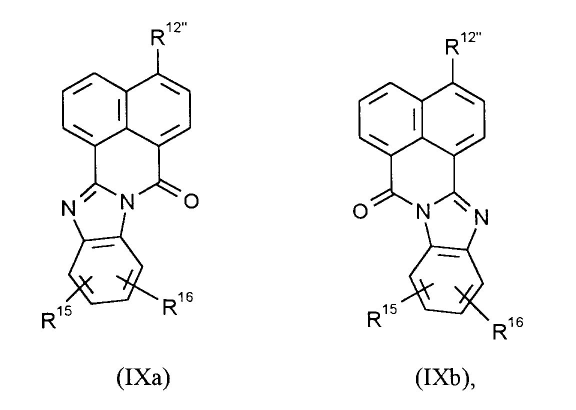 wobei R¹⁵, R¹⁶ und R^{12''} die oben genannte Bedeutung haben,
aus einem 1,8-Naphthalsäureanhydrid der Formel (VIIa) 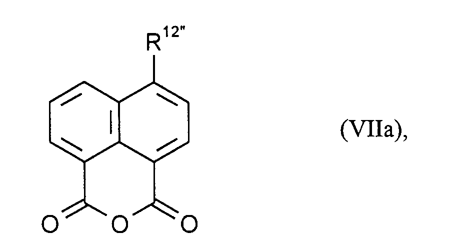 wobei R^{12''} die oben genannte Bedeutung hat,
und einem o-Phenylendiamin der Formel (X) 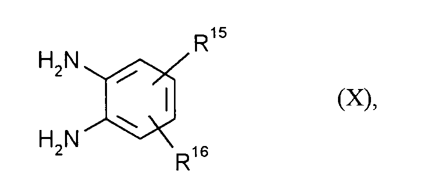 wobei R¹⁵ und R¹⁶ die oben genannte Bedeutung haben,
bei Temperaturen von 50 bis 250°C, vorzugsweise 90 bis 140°C in Gegenwart eines Verdünnungsmittels wie beispielsweise Essigsäure, Butanol, Chlorbenzol, Toluol oder Xylol herstellt und das 1,8-Naphthalimid-Derivat der Formel (IXa und b) anschließend mit einem sekundären Amin der Formel (XI) 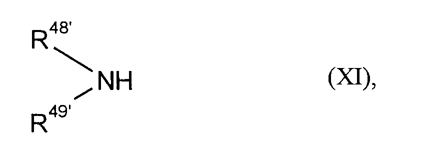 wobei R^{48'} und R^{49'} die oben genannte Bedeutung haben,
gegebenenfalls in Gegenwart eines Lösungsmittels wie beispielsweise Methoxyethanol oder Butanol unter Katalyse von beispielsweise einem Kupfer(II)-Salz bei Temperaturen von 50 bis 250°C, vorzugsweise 100 bis 150°C umsetzt.

Bei der Durchführung des erfindungsgemäßen Verfahrens (A) zur Herstellung der 1,8-Naphthalimid-Derivate der Formel (6a) setzt man im allgemeinen pro Mol Verbindung der Formel (VII) 1 bis 1,8 Mol, vorzugsweise 1,2 bis 1,4 Mol primäres Amin der Formel (VIII) ein.

Bei der Durchführung des erfindungsgemäßen Verfahrens (B) zur Herstellung der 1,8-Naphthalimid-Derivate der Formel (6a) setzt man im allgemeinen pro Mol Verbindung der Formel (VIIa) 1 bis 1,8 Mol, vorzugsweise 1,2 bis 1,4 Mol primäres Amin der Formel (VIII) und pro Mol Verbindung der Formel (6a-1) 1,2 bis 5 Mol, vorzugsweise 2 bis 2,5 Mol des entsprechenden primären, sekundären oder cyclischen Amins ein.

Die Herstellung der erfindungsgemäßen 1,8-Naphthalimid-Derivate der Formel (6a), Verfahren (A) und (B) wird beispielhaft durch das folgende Formelschema dargestellt:

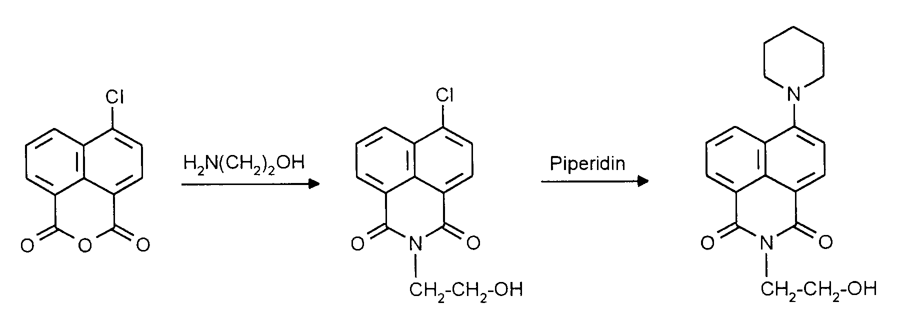

Hierbei wird zunächst das 4-Chlor-N-hydroxyethyl-1,8-naphthalimid durch Umsetzung von 4-Chlor-naphthalsäureanhydrid und 2-Aminoethanol hergestellt. Anschließend versetzt man das 4-Chlor-N-hydroxyethyl-1,8-naphthalimid mit Piperidin in Gegenwart katalytischer Menge und einem Kupfer(II)-Salz unter Bildung des erwünschten N-Hydroxyethyl-4-piperidino-1,8-naphthalimids.

Bei der Durchführung des erfindungsgemäßen Verfahrens (C) zur Herstellung der 1,8-Naphthalimid-Derivate der Formel (7a-1) und (7b-1) setzt man im allgemeinen pro Mol Verbindung der Formel (VIIa) 1 bis 1,8 Mol, vorzugsweise 1,2 bis 1,4 Mol des o-Phenylendiamins der Formel (X) und pro Mol Verbindung der Formel (IXa und b) 1,2 bis 5 Mol, vorzugsweise 2 bis 2,5 Mol des sekundären Amins der Formel (XI) ein.

Die Herstellung der erfindungsgemäßen 1,8-Naphthalimid-Derivate der Formeln (7a-1) und (7b-1) (Verfahren C) wird beispielhaft durch das folgende Formelschema dargestellt:

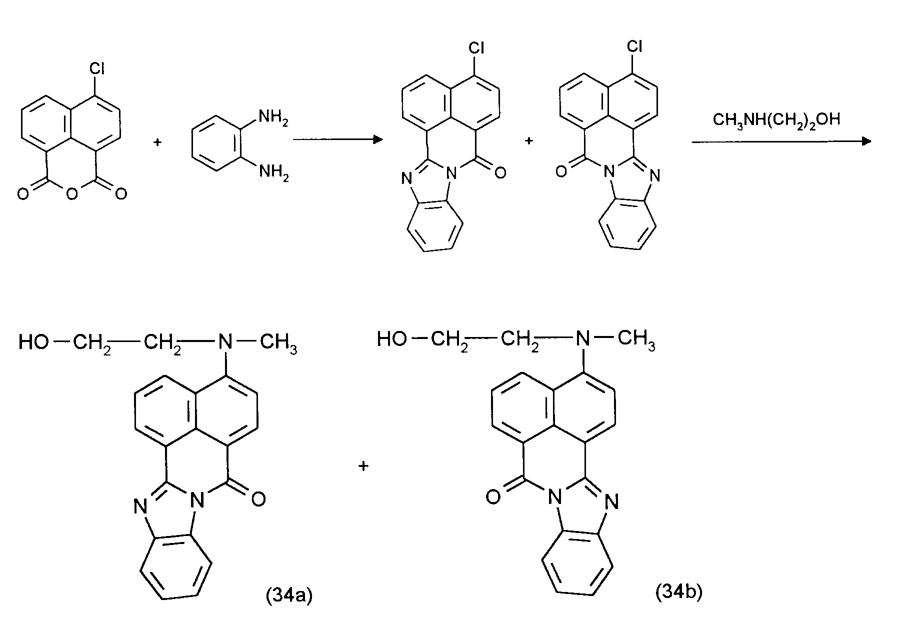

Hierbei wird zunächst das 4/5-Chlor-1,8-naphthoylen-1',2'-benzimidazol, welches als ein Isomerengemisch (ca. 3:1) anfällt, durch Umsetzung von 4-Chlor-naphthalsäureanhydrid und o-Phenylendiamin hergestellt. Anschließend versetzt man das 4/5-Chlor-1,8-naphthoylen-1',2'-benzimidazol mit 2-(Methylamino)-ethanol in Gegenwart katalytischer Menge von einem Kupfer(II)-Salz unter Bildung des erwünschten 4/5-(N-Methyl-N-hydroxyethyl)amino-1,8-naphthoylen-1',2'-benzimidazols.

Die Ausgangsverbindungen der Formeln (VII), (VIII), (VIIa), (X) und (XI) zur Herstellung der erfindungsgemäßen 1,8-Naphthalimid-Derivate der Formeln (6a), (7a-1) und (7b-1) sind allgemeine Verbindungen in der organischen Chemie.

Die zur Herstellung der erfindungsgemäßen (Co)Polymerisate weiterhin benötigten Verbindungen der Formeln (20), (21) und (22) sind allgemeine bekannte Verbindungen.

(Co)Polymerisate der vorliegenden Erfindung zeichnen sich durch ihre lumineszierenden Eigenschaften und Filmbildungsvermögen aus und lassen sich durch Gießen, Rakeln oder Spin-coating auf geeignete Unterlagen aufbringen. Die Produkte zeigen sowohl in Lösungen als auch als Filme Photolumineszenz bei Bestrahlung. Zum Aufbau von elektrolumineszierenden Anzeigen sind (Co)Polymerisate der vorliegenden Erfindung geeignet.

Bedingt durch die Strukturen und Herstellungsverfahren der erfindungsgemäßen (Co)Polymerisate lassen sich die Leuchtintensitäten durch Variation der Luminophorkonzentration gezielt verändern, die Farbtöne durch Einbauen von Luminophoren mit verschiedenen Emissionsspektren beeinflussen, die Morphologie und elektrische Eigenschaften der Polymerschichten durch Einführung geeigneter Cobausteine optimieren.

Die Erfindung betrifft daher die die Verwendung der oben beschriebenen Polymerisate bzw. Copolymerisate in der lumineszierenden Schicht einer elektrolumineszierenden Anordnung, die dadurch gekennzeichnet ist,
daß sich eine elektrolumineszierende Schicht zwischen zwei Elektroden befindet,
daß mindestens eine der beiden Elektroden im sichtbaren Spektralbereich transparent ist,
daß beim Anlegen einer Gleichspannung im Bereich von 0,1 bis 100 Volt Licht im Frequenzbereich von 200 bis 2000 nm emittiert wird,
daß zwischen der elektrolumineszierenden Schicht und den Elektroden zusätzlich eine oder mehrere Zwischenschichten angeordnet sein können.

Diese Zwischenschichten sind aus der Literatur bekannt (vgl. Adachi et al., Appl. Phys. Lett., 57, 531 (1990)) und werden dort als HTL (hole transport layer) und als ETL (electron transport layer) bezeichnet. Der Sinn solcher Zwischenschichten liegt u.a. in der Erhöhung der Elektrolumineszenzintensität.

Die erfindungsgemäßen elektrolumineszierenden Polymere können aber auch als eine Mischung miteinander oder mit mindestens einem weiteren Material in der elektrolumineszierenden Schicht eingesetzt werden. Bei diesem weiteren Material kann es sich um
1. inerte Binder
2. ladungsträgertransportierende Substanzen wie in EP-A 532 798 oder EP-A 564 224 beschrieben
3. Mischungen aus inerten Bindern und ladungsträgertransportierenden Substanzen
handeln.

Die Mischungen aus den erfindungsgemäßen Polymeren und einem weiteren Material zeichnen sich u.a. dadurch aus, daß sie filmbildend sind und durch Gießen, Rakeln oder Spin-coating großflächig auf geeignete Substrate aufgebracht werden können. Als Substrat sind transparente Träger wie Glas oder Kunststoff-Folien (z.B. Polyester, wie Polyethylenterephthalat oder Polyethylennaphthalat, Polycarbonat, Polysulfon, Polyimid-Folien) geeignet.

Bei dem inerten Binder handelt es sich vorzugsweise um lösliche transparente Polymere wie z.B. Polycarbonate, Polystyrol, Polyvinylpyridin, Polymethylphenylsiloxan und Copolymere des Polystyrols wie SAN, Polysulfone, Polyacrylate, Polyvinylcarbazol, Vinylacetat- und Vinylalkoholpolymere und -copolymere.

### Beispiele

### Beispiel 1

### Herstellung von Copolymerisat gemäß Formel (27) (x : y = 0,4 : 0,6)

1. Herstellung von Copolymerisat gemäß Formel (25) (x : y = 0,4 : 0,6) als eine 79%ige Lösung in Toluol
   Zu einem auf 110°C erhitzten Dreihalskolben tropft man unter Stickstoff mit Rühren innerhalb 3 Stunden eine Lösung von 201 g (1,00 mol) m-(2-Isocyanato-prop-2-yl)-α-methylstyrol (23), 180 g (1,52 mol) m/p-Methylstyrol und 1,5 g (9,1 mmol) AIBN in 100 g getrocknetem Toluol. Die Polymerisationsmischung wird innerhalb 16 Stunden bei der gleichen Temperatur mehrmals mit AIBN (insgesamt 2 g) versetzt. Man erhält eine farblose zähfließende Lösung.
2. Herstellung des 3-(6-Hydroxyhexoxycarbonyl)-7-diethylaminocumarins der Formel (26)
   Eine Lösung von Bis-(6-hydroxyhexyl)-malonat in 1,6-Hexandiol wird beim Erhitzen einer Mischung aus 21,6 g (0,15 mol) Meldrum's-Säure, 59 g (0,50 mol) 1,6-Hexandiol und 0,28 g (1,5 mmol) p-Toluolsulfonsäuremonohydrat für 2 Stunden bei 140°C dargestellt
   Anschließend versetzt man die resultierende Lösung mit 26,0 g (0,135 mol) 4-Diethylamino-salicylaldehyd, 0,7 ml Piperidin und 0,1 ml Essigsäure. Die Reaktionsmischung wird 3 Stunden bei 110°C gerührt und nach Abkühlung mit 300 ml Wasser versetzt. Man extrahiert die Suspension mit Dichlormethan. Die organische Phase wird eingeengt und der Rückstand aus Toluol umkristallisiert. Man erhält 40,2 g (83 %) 3-(6-Hydroxyhexoxycarbonyl)-7-diethylamino-cumarin als gelbe Kristalle vom Schmelzpunkt 85 bis 86°C.
3. Herstellung von Copolymerisat gemäß Formel (27) (x : y = 0,4 : 0,6)
   Zu einer Mischung von 3,0 g (ca. 6,2 mmol NCO-Gruppe) einer 79 %igen Lösung in Toluol vom Copolymerisat gemäß Formel (25) (x : y = 0,4 : 0,6) (Beispiel 1.1), 2,2 g (6,1 mmol) 3-(6-Hydroxyhexoxycarbonyl)-7-diethylamino -cumarin (26) und 15 ml wasserfreiem Toluol gibt man unter Stickstoff 2 mg Dibutylzinndilaurat. Das Reaktionsgemisch wird bei 110°C gerührt, wobei die relative Menge des gebundenen und freien Farbstoffes ständig durch Dünnschichtchromatographie überprüft wird, bis keine deutlichen Änderungen beobachtbar sind. Die resultierende viskose Lösung wird nach Abkühlung aus Methanol gefällt. Man erhält 4 g (87 % der Theorie) eines blaßgelben, blaufluoreszierenden Feststoffs.

### Beispiel 2

### Herstellung von Copolymerisat gemäß Formel (31) (x : y = 0,05 : 0,95)

1. Herstellung vom Copolymerisat gemäß Formel (29) (x : y = 0,05 : 0,95)
   Unter Stickstoff und mit Rühren wird eine Lösung von 0,5 g (2,49 mmol) m-(2-Isocyanato-prop-2-yl)-α-methylstyrol (23), 9,52 g (49,3 mmol) N-Vinylcarbazol (28) und 80 mg (0,49 mmol) AIBN in 10 g getrocknetem Toluol 5 Stunden unter Rückfluß erhitzt. Das Lösungsmittel der viskosen Polymerisationsmischung wird unter Feuchtigkeitsausschluß in Vakuum entfernt. Man erhält 9,7 g (97 % der Theorie) farblosen Feststoff.
2. Herstellung des N-(4-n-Butylphenyl)-4-(N'-Methyl-N'-hydroxyethyl)amino-1,8-naphthalimid der Formel (30)
   Ein Gemisch aus 46,6 g (0,20 mol) 4-Chlor-1,8-naphthalsäureanhydrid, 32,8 g (0,22 mol) 4-n-Butylanilin und 300 ml Essigsäure wird 2 Stunden bei 130°C gerührt. Die Lösung wird auf Raumtemperatur abgekühlt und anschließend mit 2 l Wasser versetzt. Man filtriert die Suspension und erhält nach Trocknen 69 g (95 % der Theorie) 4-Chlor-N-(4-n-Butylphenyl)-1,8-naphthalimid als blaßgelbe Kristalle.
   Ein Gemisch aus 36,0 g (0,10 mol) 4-Chlor-N-(4-n-Butylphenyl)-1,8-naphthalimid, 22,5 g (0,30 mol) 2-(Methylamino)-ethanol, 2,0 g Kupfer(II)sulfat und 150 ml Ethylenglykolmonomethylether wird 2 Stunden unter Rückfluß gerührt. Die Lösung wird auf Raumtemperatur abgekühlt und anschließend mit 1 l Wasser versetzt. Man extrahiert die Suspension mit Dichlormethan. Die organische Phase wird eingeengt und der Rückstand aus Toluol umkristallisiert. Man erhält 34 g (85%) N-(4-n-Butylphenyl)-4-(N'-Methyl-N'-hydroxyethyl)amino-1,8-naphthalimid als braune Kristalle.
3. Herstellung vom Copolymerisat gemäß Formel (31) (x : y = 0,05 : 0,95)
   In Analogie zu dem im Beispiel 1.3 beschriebenen Verfahren läßt sich ausgehend von 3,0 g (0,74 mmol NCO-Gruppe) des Copolymerisats gemäß Formel (29) (x : y = 0,05 : 0,95) (Beispiel 2.1), 0,3 g (0,75 mmol) N-(4-Butyl-phenyl)-4-(N'-methyl-N'-hydroxyethyl)amino-1,8-naphthalimid (30) mit getrocknetem Dichlormethan als Verdünnungsmittel bei 45°C 3,0 g (91 % der Theorie) eines gelben, grünfluoreszierenden Feststoffe herstellen.

### Beispiel 3

### Herstellung von Copolymerisat gemäß Formel (35) (x : y = 0,5 : 0,5)

1. Herstellung von Copolymerisat gemäß Formel (33) (x : y = 0,5 : 0,5) als eine 50%ige Lösung in 1-Methoxy-2-propylacetat
   In Analogie zu dem im Beispiel 1.1 beschriebenen Verfahren läßt sich aus 15,5 g (0,10 mol) 2-Isocyanatoethyl-methacrylat (32) 19,3 g (0,10 mol) N-Vinylcarbazol (28), 0,32 g (2,0 mmol) AIBN und 35 g getrocknetem 1-Methoxy-2-propylacetat das Copolymerisat gemäß Formel (33) (x : y = 0,5 : 0,5) als eine 50%ige Lösung in 1-Methoxy-2-propylacetat herstellen.
2. Herstellung des 4/5-(N-Methyl-N-hydroxyethyl)amino-1,8-naphthoylen-1',2'-benzimidazols der Formel (34)
   In Analogie zu dem Verfahren gemäß Beispiel 2.2 erhält man aus 4-Chlor-1,8-naphthalsäureanhydrid und o-Phenylendiamin das 4/5-Chlor-1,8-naphthoylen-1',2'-benzimidazol in 87%iger Ausbeute als gelbe Kristalle vom Schmelzpunkt 225 bis 226°C.
   In Analogie zu dem Verfahren gemäß Beispiel 2.2 erhält man aus 4/5-Chlor-1,8-naphthoylen-1',2'-benzimidazol und 2-(Methylamino)-ethanol das 4/5-(N-Methyl-N-hydroxyethyl)amino-1,8-naphthoylen-1',2'-benzimidazol in 82%iger Ausbeute als rotbraune Kristalle vom Schmelzpunkt 168 bis 169°C.
3. Herstellung vom Copolymerisat gemäß Formel (35) (x : y = 0,5 : 0,5)
   In Analogie zu dem im Beispiel 1.3 beschriebenen Verfahren läßt sich ausgehend von 3,5 g (ca. 5 mmol NCO-Gruppe) einer 50%igen Lösung des Copolymerisats gemäß Formel (33) (x : y = 0,5 : 0,5) in 1-Methoxy-2-propylacetat (Beispiel 3.1), 1,71 g (5,0 mmol) 4/5-(N-Methyl-N-hydroxyethyl)amino-1,8-nephthaloylen-1',2'-benzimidazol (34) 2,9 g (84 % der Theorie) eines orangen, gelbfluoreszierenden Feststoffs herstellen.

### Beispiel 4

### Herstellung von Copolymerisat gemäß Formel (38) (x : y = 0,44 : 0,56)

1. Herstellung von Copolymerisat gemäß Formel (36) (x : y = 0,44 : 0,56) als eine 78%ige Lösung in 1-Methoxy-2-propylacetat 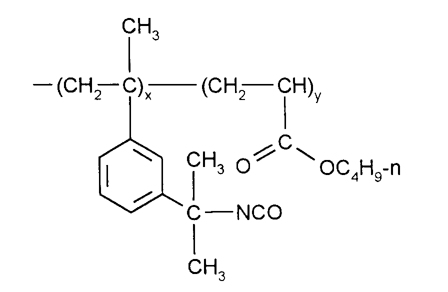 In Analogie zu dem im Beispiel 1.1 beschriebenen Verfahren läßt sich aus 201 g (1,00 mol) m-(2-Isocyanato-prop-2-yl)-α-methylstvrol (23), 160 g (1,25 mol) Butylacrylat, 2,5 g (15 mmol) AIBN und 100 g getrocknetem 1-Methoxy-2-propylacetat das Copolymerisat gemäß Formel (36) (x : y = 0,44 : 0,56) als eine 78%ige Lösung in 1-Methoxy-2-propylacetat herstellen.
2. Herstellung des 3-[(N-Hydroxyethyl-N-methyl)-aminocarbonyl]-7-diethylamino-cumarins der Formel (37)
   Unter Rühren versetzt man eine Mischung aus 19,3 g (0,10 mol) 4-Diethylamino-salicylaldehyd und 19,2 g (0,12 mol) Diethylmalonat mit 30 ml 2-(Methylamino)-ethanol, 0,3 ml Piperidin und 0,3 ml Essigsäure. Die Reaktionsmischung wird 4 Stunden bei 100°C gerührt und nach Abkühlung mit 200 ml Wasser versetzt. Man extrahiert die Suspension mit Dichlormethan. Die organische Phase wird eingeengt und der Rückstand aus Toluol umkristallisiert. Man erhalt 25,4 g (80 %) 3-[(N-Hydroxyethyl-N-methyl)-aminocarbonyl]-7-diethylamino-cumarin als braune Kristalle vom Schmelzpunkt 94,5 bis 96,5°C.
3. Herstellung vom Copolymerisat gemäß Formel (38) (x : y = 0,44 : 0,56) 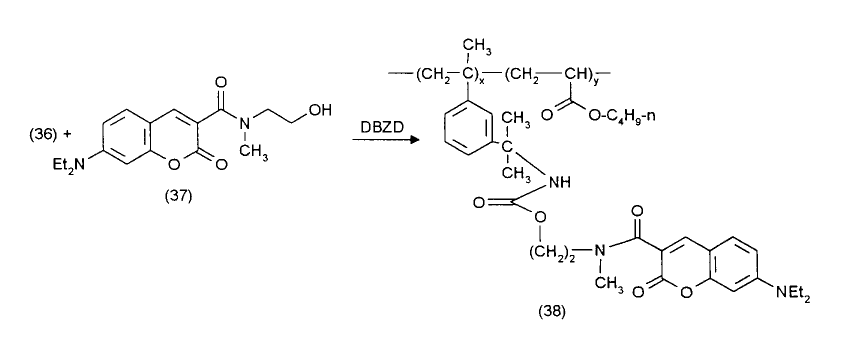 In Analogie zu dem im Beispiel 1.3 beschriebenen Verfahren läßt sich ausgehend von 4,8 g (ca. 10 mmol NCO-Gruppe) eine 78%ige Lösung des Copolymerisats gemäß Formel (36) (x : y = 0,5 : 0,5) in 1-Methoxy-2-propylacetat (Beispiel 4.1), 3,18 g (10 mmol) 3-(N-Hydroxyethyl-N-methyl)aminocarbonyl-7-diethylamino-cumarin (37) 5,7 g (82 % der Theorie) eines braunen blaufluoreszierenden Feststoffs herstellen.

### Verwendungsbeispiel

### Herstellung der elektrolumineszierenden Anordnung aus dem Copolymerisat (31) (x : y = 0,05 : 0,95) (Beispiel 2.3)

ITO beschichtetes Glas (hergestellt von der Fa. Balzers) wird in 20 x 30 mm große Substrate geschnitten und gereinigt. Dabei werden folgende Schritte sukzessiv durchgeführt:
1. 15 Minuten mit destilliertem Wasser und Falterol im Ultraschallbad spülen,
2. 2 x 15 Minuten mit jeweils frischem destilliertem Wasser im Ultraschallbild spülen,
3. 15 Minuten mit Ethanol im Ultraschallbad spülen,
4. 2 x 15 Minuten mit jeweils frischem Aceton im Ultraschallbild spülen,
5. Trocknen auf fusselfreien Linsentüchern.

Eine 1%ige Lösung vom Polymer gemäß Formel (31) (x : y = 0,05 : 0,95) in 1,2-Dichlorethan wird gefiltert (0,2 µm-Filter, Fa. Sartorius). Die gefilterte Lösung wird mit einer Lackschleuder bei 1000 U/min auf dem ITO-Glas verteilt. Die Dicke des trockenen Films beträgt 170 nm und der Ra-Wert der Oberfläche beträgt 10 nm (Stylusprofilometer Alpha-Step 200 der Fa. Tencor Inst.).

Der so hergestellte Film wird anschließend mit Al-Elektroden bedampft. Dazu werden mit Hilfe einer Lochmaske isolierte Al-Punkte mit einem Durchmesser von 3 mm auf den Film gedampft. Während des Aufdampfens herrscht in einer Aufdampfapparatur (Leybold) ein Druck unter 10⁻⁵ mbar.

Die ITO-Schicht und die Al-Elektrode wird über elektrische Zuführung mit einer Spannungsquelle verbunden. Beim Erhöhen der Spannung fließt ein elektrischer Strom durch die Anordnung und die beschriebene Schicht elektroluminesziert im gelbgrünen Spektralbereich. Die Elektrolumineszenz tritt dabei unabhängig von der Polung der angelegten Spannung auf.

## Patentansprüche

1. (Co)Polymerisate, die mindestens einen wiederkehrenden Kettenbaustein der allgemeinen Formel (1) oder (2) und gegebenenfalls wiederkehrende Einheiten der allgemeinen Formel (3) enthalten, 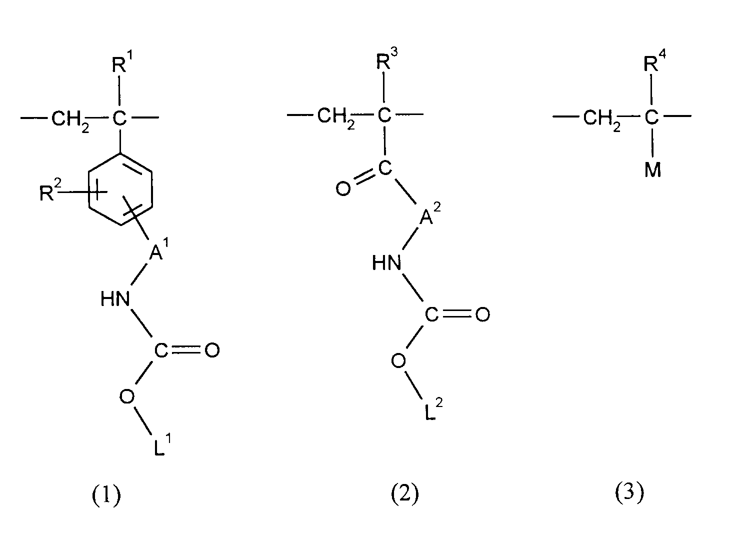 worin
R¹, R³ und R⁴ unabhängig voneinander Wasserstoff oder C₁-C₆-Alkyl bedeuten,
R² Wasserstoff, C₁-C₃₀-Alkyl, C₆-C₁₈-Aryl oder C₁-C₃₀-Alkoxy bedeutet,
M für CN oder C₁-C₃₀-Alkoxycarbonyl, C₁-C₃₀-(Di)alkylaminocarbonyl, C₁-C₃₀-Alkylcarbonyl steht, die jeweils durch Hydroxy oder C₁-C₆-Alkoxycarbonyl substituiert sein können, weiterhin für Phenyl, Naphthyl, Anthracenyl, Pyridinyl, Carbazolyl steht, die jeweils durch Reste ausgewählt aus der Gruppe Halogen, Hydroxy, Silyl, C₁-C₃₀-Alkyl, C₆-C₁₈-Aryl, C₁-C₃₀-Alkoxy, C₁-C₃₀-Alkoxycarbonyl, C₁-C₃₀-Acyloxy, C₁-C₃₀-Alkylcarbonyl substituiert sein können,
A¹ und A² unabhängig voneinander C₆-C₁₈-Arylen oder C₁-C₃₀-Alkylen bedeuten, deren aliphatische Kohlenstoffkette durch ein bis drei Heteroatome wie Sauerstoff, Schwefel und/oder durch ein bis zwei Phenylene oder Naphthylene gegebenenfalls mit C₁-C₆-Alkyl substituierten unterbrochen sein kann, bedeuten, und
L¹ und L² unabhängig voneinander einen photolumineszierenden Rest bedeuten,
wobei der Anteil an Struktureinheiten der Formel (3) 0 bis 99,5 mol-% und der Anteil an Struktureinheiten der Formel (1) oder (2) jeweils 0,5 % bis 100 mol-% betragen und sich die Molanteile zu 100 % ergänzen.

2. Copolymerisate gemäß Anspruch 1, worin L¹ und L² unabhängig voneinander für einen photolumineszierenden Rest, der auf dem Gerüst eines Fluoreszenzfarbstoffs basiert, der ausgewählt ist aus der Gruppe der
Cumarine der Formel (4) 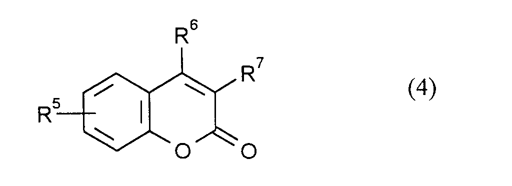 Pyrene der Formel (5) 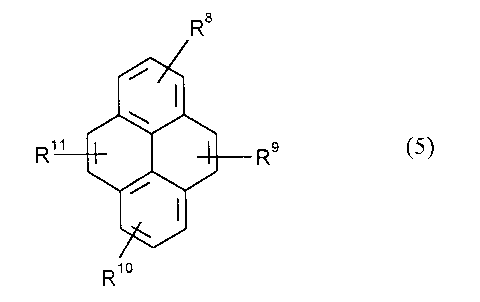 1,8-Naphthalimide der Formel (6) 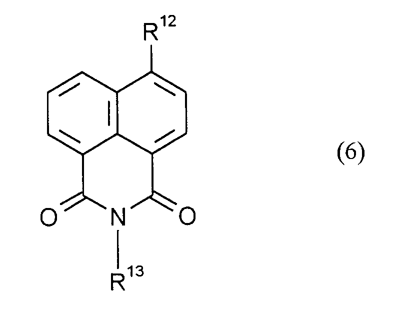 1,8-Naphthaloylen-1',2'-benzimidazole der Formel (7) 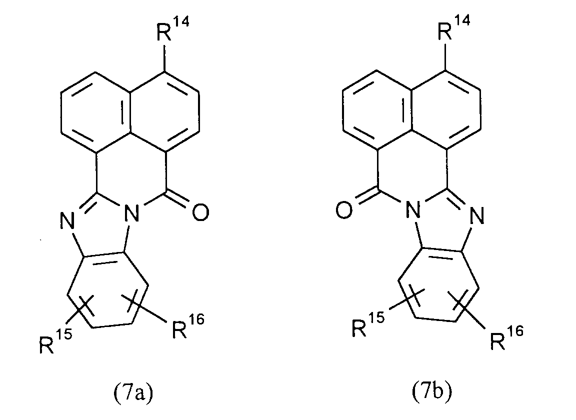 Phenothiazine oder Phenoxazine der Formel (8) 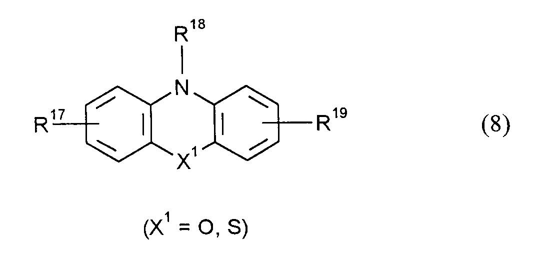 Benzopyrone der Formel (9) 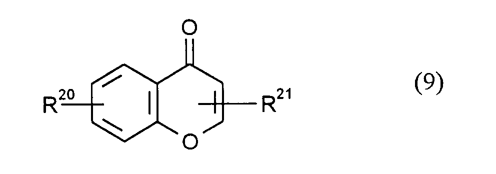 Carbazole, Fluorene, Dibenzothiophene und -furane der Formel (10) 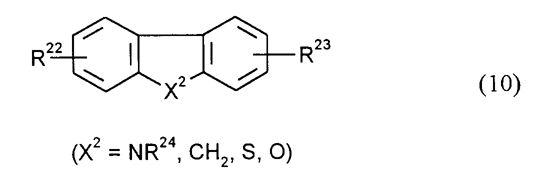 Oxazole, 1,3,4-Oxadiazole und 1,2,4-Triazole der Formel (11) 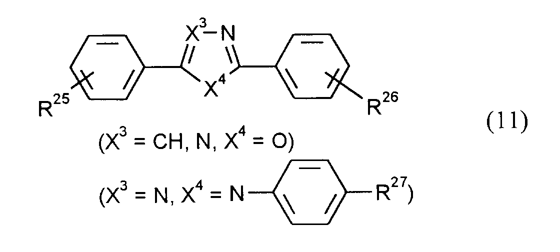 Benzochinoline der Formel (12) 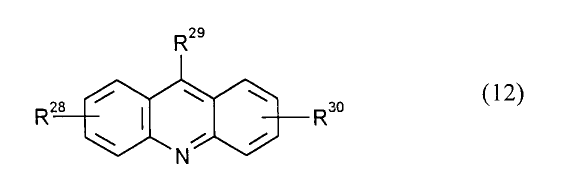 9,10-Bis-(phenylethinyl)-antracene der Formel (13) 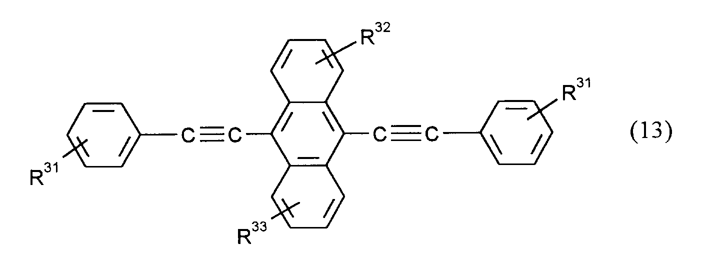 Fluorone der Formel (14) 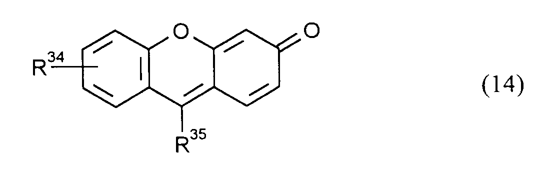 9,10-Diphenylantracen der Formel (15) 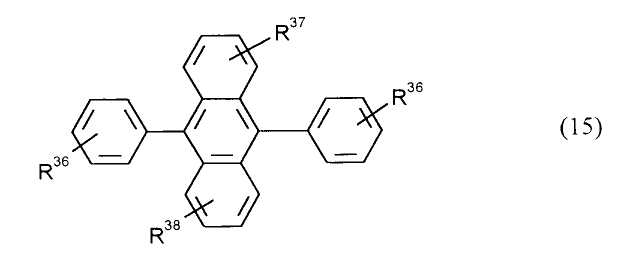 2-Styrylbenzazol der Formel (16) 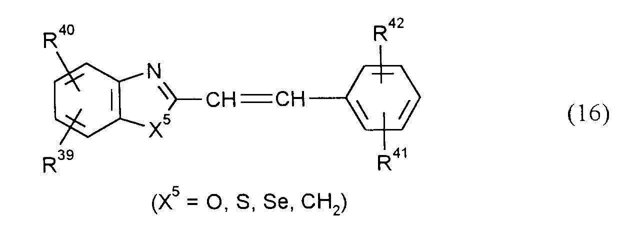 wobei
R⁵ für Wasserstoff, C₁-C₃₀-Alkyl, C₆-C₁₈-Aryl, C₇-C₂₄-Aralkyl oder für -NR⁴³R⁴⁴ steht, wobei R⁴³ und R⁴⁴ unabhängig voneinander für C₁-C₃₀-Alkyl, C₆-C₁₈-Aryl, C₇-C₂₄-Aralkyl stehen oder gemeinsam mit dem Stickstoffatom, an das sie gebunden sind, einen Morpholin-, Piperidin-, Pyrrolidin- oder Piperazinring, der einen oder zwei Substituenten aus der Gruppe Methyl, Ethyl und Phenyl tragen kann, bedeuten können,
R⁶ für Wasserstoff, Cyano, C₁-C₃₀-Alkyl, C₆-C₁₈-Aryl oder C₇-C₂₄-Aralkyl, C₁-C₃₀-Alkoxy, C₁-C₁₂-Alkylcarbonyl, C₁-C₁₂-Alkoxycarbonyl, C₁-C₁₂-(Di)-Alkylaminocarbonyl steht,
R⁷ für Wasserstoff, Cyano, C₁-C₃₀-Alkyl, C₆-C₁₈-Aryl oder C₇-C₂₄-Aralkyl, C₁-C₃₀-Alkoxy oder für 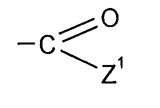 steht, wobei
Z¹ für eine Gruppe OR⁴⁵ oder 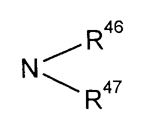 steht und
R⁴⁵, R⁴⁶ und R⁴⁷ unabhängig voneinander für C₁-C₃₀-Alkyl, C₆-C₁₈-Aryl oder C₇-C₂₄-Aralkyl stehen, wobei die aromatischen Ringe zusätzlich durch Halogen, C₁-C₆-Alkyl und/oder C₁-C₆-Alkoxy substituiert sein können,
R⁸ bis R¹⁰ unabhängig voneinander Wasserstoff, Cyano, C₁-C₃₀-Alkyl, C₆-C₁₈-Aryl, C₇-C₂₄-Aralkyl, C₁-C₃₀-Alkoxy, C₁-C₁₂-Alkylcarbonyl, C₁-C₁₂-Alkoxycarbonyl oder eine Aminogruppe mit einer oder zwei C₁-C₆-Alkylgruppen bedeuten,
R¹¹ für Wasserstoff, Cyano, C₁-C₃₀-Alkyl, C₆-C₁₈-Aryl, C₇-C₂₄-Aralkyl, C₁-C₃₀-Alkoxy, Amino, C₁-C₁₂-Alkylcarbonyl, C₁-C₁₂-Alkoxycarbonyl oder C₁-C₁₂-(Di)Alkylaminocarbonyl steht,
R¹² für Wasserstoff, Halogen, Nitro, C₁-C₄-Alkylcarbonyl, C₁-C₄-Alkoxycarbonyl, C₈-C₂₄-Aralkenyl, unsubstituiertes Amino oder für ein- oder zweifach, gleich oder verschieden durch C₁-C₃₀-Alkyl, C₆-C₁₈-Aryl, C₇-C₂₄-Aralkyl substituiertes Amino steht,
R¹² weiterhin für Morpholinyl, Piperidinyl, Pyrrolidinyl oder Piperazinyl steht, die einen oder zwei Substituenten aus der Gruppe Methyl, Ethyl und Phenyl tragen können,
R¹³ für Wasserstoff, C₁-C₃₀-Alkyl, C₆-C₁₈-Aryl, C₇-C₂₄-Aralkyl oder C₁-C₃₀-Alkoxy steht,
R¹⁴ für Wasserstoff, C₁-C₃₀-Alkyl, C₆-C₁₈-Aryl, C₇-C₂₄-Aralkyl, C₁-C₃₀-Alkoxy oder für -NR⁴⁸R⁴⁹ steht, wobei R⁴⁸ und R⁴⁹ unabhängig voneinander für C₁-C₃₀-Alkyl, C₆-C₁₈-Aryl, C₇-C₂₄-Aralkyl stehen oder gemeinsam mit dem Stickstoffatom, an das sie gebunden sind, einen Morpholin-, Piperidin-, Pyrrolidin- oder Piperazinring, der einen oder zwei Substituenten aus der Gruppe Methyl, Ethyl und Phenyl tragen kann, bedeuten können.
R¹⁵ und R¹⁶ unabhängig voneinander für Wasserstoff, Halogen, Nitro, C₁-C₃₀-Alkyl, C₆-C₁₈-Aryl, C₇-C₂₄-Aralkyl, C₁-C₁₂-Alkylcarbonyl, C₁-C₁₂-Alkoxycarbonyl, C₁-C₃₀-Alkoxy, C₁-C₁₂-(Di)Alkylaminocarbonyl, C₁-C₆-(Di)-Alkylamino stehen,
R¹⁸ und R²⁴ unabhängig voneinander für Wasserstoff, C₁-C₃₀-Alkyl, C₆-C₁₈-Aryl und C₇-C₂₄-Aralkyl steht und
R¹⁷, R¹⁹ bis R²³, R²⁵ bis R⁴² unabhängig voneinander für Wasserstoff, Cyano, C₁-C₃₀-Alkyl, C₆-C₁₈-Aryl, C₇-C₂₄-Aralkyl, Amino, C₁-C₁₂-Alkylcarbonyl, C₁-C₁₂-Alkoxycarbonyl, C₁-C₃₀-Alkoxy, C₁-C₁₂-(Di)Alkylaminocarbonyl, C₁-C₆-(Di)Alkylamino stehen,
wobei sich mindestens eine Hydroxygruppe an einer aliphatischen Kohlenstoffkette oder an einem aromatischen Ring in den Substituenten R⁵ bis R⁴² befindet und die Anknüpfung des photolumineszierenden Rests an die Polymerseitenketten durch Reaktion dieser Hydroxygruppe mit einer Isocyanat-Gruppe am Rest A¹ bzw. A² unter Ausbildung der Urethan-Gruppe (-NH-COO-) erfolgt.

3. (Co)Polymerisate nach Anspruch 1 und 2, wobei
R¹, R³ und R⁴ unabhängig voneinander Wasserstoff, Methyl oder Ethyl bedeuten,
R² Wasserstoff, C₁-C₆-Alkyl oder gegebenenfalls durch Methyl, Ethyl, n-Propyl und/oder iso-Propyl substituiertes Phenyl bedeutet,
M für CN oder C₁-C₁₅-Alkoxycarbonyl-, C₁-C₁₅-(Di)-Alkylaminocarbonyl, C₁-C₁₅-Alkylcarbonyl, die jeweils durch Hydroxy, Methoxycarbonyl, Ethoxycarbonyl, n- und/oder iso-Propoxycarbonyl substituiert sein können, weiterhin für Phenyl, Naphthyl, Anthracenyl, Pyridinyl, Carbazolyl steht, die jeweils durch Reste aus der Gruppe Halogen, Hydroxy, Silyl, C₁-C₆-Alkyl, C₁-C₆-Alkoxy, C₁-C₆-Alkoxycarbonyl, C₁-C₆-Acyloxy, C₁-C₆-Alkylcarbonyl, gegebenenfalls durch Methyl, Ethyl, n- und/oder iso-Propyl substituiertes Phenyl substituiert sein können,
A¹ und A² unabhängig voneinander C₆-C₁₂-Arylen oder C₁-C₁₂-Alkylen bedeuten, dessen Kohlenstoffkette durch ein bis drei Heteroatome wie O, S und/oder durch ein bis zwei Phenylene oder Naphthylene gegebenenfalls mit C₁-C₆-Alkylsubstituenten unterbrochen sein können,
L¹ und L² unabhängig voneinander für einen Rest der Fluoreszenzfarbstoffe, ausgewählt aus der Gruppe der Cumarine der Formel (4), Pyrene der Formel (5), 1,8-Naphthalimide der Formel (6), 1,8-Naphthaloylen1',2'-benzimidazole der Formel (7), Phenothiazine oder Phenoxazine der Formel (8), Carbazole und Fluorene der Formel (10) stehen.

4. Verfahren zur Herstellung der (Co)Polymerisate gemäß Anspruch 1 dadurch gekennzeichnet, daß man einen mit einer Hydroxygruppe funktionalisierten Fluoreszenzfarbstoff der Formel (17)
L¹-OH oder L²-OH (17)
wobei L¹ und L² die in Anspruch 1 angegebene Bedeutung haben,
mit einem (Co)Polymerisat, das mindestens einen wiederkehrenden Kettenbaustein der allgemeinen Formel (18) oder (19) und gegebenenfalls wiederkehrende Einheiten der allgemeinen Formel (3) enthält, 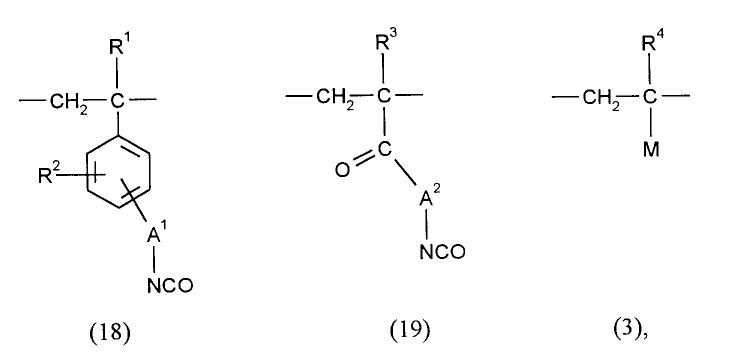 worin R¹, R², R³, R⁴, M, A¹ und A² den im Anspruch 1 angegebenen Bedeutungsumfang haben, der Anteil an Struktureinheiten der Formel (3) 0 bis 99,5 mol-% und der Anteil an Struktureinheiten der Formel (18) oder (19) jeweils 0,5 bis 100 mol-% beträgt und sich die Molanteile zu 100 ergänzen,
in Gegenwart eines Katalysators und in Gegenwart eines Verdünnungsmittels bei Temperaturen von 20 bis 250°C umsetzt.

5. Verwendung der (Co)Polymerisate gemäß den Ansprüchen 1 bis 3 in der lichtemittierenden Schicht einer elektrolumineszierenden Anordnung, die dadurch gekennzeichnet ist, daß sich eine elektrolumineszierende Schicht zwischen zwei Elektroden befindet, daß mindestens eine der beiden Elektroden im sichbaren Spektralbereich transparent ist, daß beim Anlegen einer Gleichspannung im Bereich von 0,1 bis 100 Volt Licht im Frequenzbereich von 200 bis 2000 nm emittiert wird, daß zwischen der elektrolumineszierenden Schicht und den Elektroden zusätzlich eine oder mehrere Zwischenschichten angeordnet sein können.

6. Elektrolumineszierende Anordnungen, die als elektrolumineszierende Substanz (Co)Polymerisate nach Anspruch 1 bis 3 enthalten.
